# EUROPÄISCHE PATENTSCHRIFT

(11) **EP 2 352 944 B1**
(45) Veröffentlichungstag und Bekanntmachung des Hinweises auf die Patenterteilung: **27.04.2016**
(21) Anmeldenummer: 09771703.7
(22) Anmeldetag: 24.11.2009
(51) Int. Cl.: F16L 41/06, F16L 55/46

(54) **WARTUNGSVORRICHTUNG UND VERFAHREN ZUM EINBRINGEN EINES WARTUNGSWERKZEUGS IN EINEN LÄNGSGESTRECKTEN HOHLKÖRPER**
MAINTENANCE DEVICE, AND METHOD FOR INTRODUCING A MAINTENANCE TOOL INTO AN ELONGATE HOLLOW MEMBER
DISPOSITIF D'ENTRETIEN ET PROCÉDÉ D'INTRODUCTION D'UN OUTIL D'ENTRETIEN DANS UN CORPS CREUX ALLONGÉ

(30) Priorität: 26.11.2008 DE 102008059061
(43) Veröffentlichungstag der Anmeldung: 10.08.2011
(73) Patentinhaber: Rosen Swiss AG, 6370 Stans (CH)
(72) Erfinder: ROSEN, Hermann, CH-6047 Kastanienbaum (Horw LO) (CH)
(74) Vertreter: Weeg, Thomas
(86) Internationale Anmeldenummer: PCT/EP2009/008356
(87) Internationale Veröffentlichungsnummer: WO 2010/060594

(56) Entgegenhaltungen:
- EP-B1- 0 935 089
- DE-A1- 4 429 874
- JP-A- 2003 148 680
- US-A- 5 101 545
- US-B1- 6 416 263

## Beschreibung

Die Erfindung betrifft eine Wartungsvorrichtung für einen längsgestreckten, rohrförmigen Hohlkörper, der zur Leitung eines Fluids ausgebildet ist, mit einer Dichtvorrichtung, die zur Abdichtung des Arbeitsbereichs gegenüber einer Umgebung des Hohlkörpers vorgesehen und entlang des Hohlkörpers in eine Richtung bewegbar ist nach dem Oberbegriff des Anspruchs 1. Des Weiteren betrifft die Erfindung ein Verfahren zum Einbringen eines Wartungswerkzeugs in einen vorbeschriebenen Hohlkörper nach dem Oberbegriff des Anspruchs 23, wobei der Hohlkörper insbesondere eine Pipeline für die Leitung von beispielsweise Gas, Wasser oder Öl ist.

Rohrförmige Hohlkörper, d.h. im Wesentlichen Rohrleitungen oder Pipelines liegen oft für lange Zeit in unwirtlichen Gegenden und müssen aufgrund von Alterungsprozessen regelmäßig gewartet werden. Der Zugang zu der des Weiteren oft erdverlegten Pipeline ist häufig schwierig. Zur Wartung solcher Pipelines, insbesondere zum Einbringen eines Wartungswerkzeugs in eine Pipeline existieren eine Reihe von Techniken, über die eine Öffnung in eine Pipeline eingebracht werden kann und über die Wartungswerkzeuge -beispielsweise Reinigungsmolche- in die Pipeline eingebracht werden können.

In der EP 0 935 089 B1 sind eine Vorrichtung und ein Verfahren zum Einschneiden einer Rohrleitung dargestellt, bei denen eine Dichtvorrichtung in Form eines Gehäuses quer zur Längserstreckung der Rohrleitung und damit entlang des Umfangs der Rohrleitung bewegt wird. Die Vorrichtung sitzt dicht auf der Rohrleitung. Das Gehäuse dichtet zwischen den beiden in Längsrichtung der Rohrleitung voneinander entfernten Vorrichtungsteilen befindlichen Arbeitsraum gegenüber einer Umgebung der Rohrleitung ab. Über Öffnen oder Entfernen des Gehäuses wird der Arbeitsraum oder -bereich zugänglich. Dieser ist bezogen auf den Querschnitt der zu wartenden Pipeline groß, so dass ein Weiterbetrieb der Rohrleitung ohne ein Abdichten des in die Rohrwand eingebrachten Schnitts den Strom in der Rohrleitung maßgeblich beeinflusst. In die Leitung einbringbare Wartungswerkzeuge werden darüber hinaus immer unter einem Winkel in die Leitung geführt und können gerade aufgrund der durch die Strömungsbeeinflussung entstandenen Verwirbelungen leicht in der Rohrleitung verkanten.

In der US 6,416,263 B1 ist eine Wartungsvorrichtung für einen längsgestreckten, rohrförmigen Hohlkörper beschrieben, bei der eine Dichtvorrichtung mit Dichtungen, die einen axialen Arbeitsbereich zu beiden Seiten gegenüber dem Hohlkörper abdichten, längs des Hohlkörpers verschiebbar sind, um mit einem Schneidwerkzeug einen Schnitt in axialer Richtung in den Hohlkörper einzubringen. Die Dichtwirkung und die Beweglichkeit der Dichtungen hängt bei dieser Bewegung allerdings von der Oberflächenbeschaffenheit des Hohlkörpers ab.

Die JP 2003 148680 A zeigt eine Wartungsvorrichtung für längsgestreckte, rohrförmige Hohlkörper, bei der eine Schneideinrichtung auf einem Ringteil in Umlaufrichtung beweglich gelagert ist, das sich gegenüber einem zu schneidenden Rohr auf zwei Lagergehäuse oder Lagerschalen abstützt. Hier ist eine eindimensionale Beweglichkeit in Umlaufrichtung gegeben.

Aus der DE 44 29 874 A1 ist eine Vorrichtung nach dem Oberbegriff des Anspruchs 1 und ein Verfahren nach dem Oberbegriff des Anspruchs 23 bekannt. Die dort offenbarte Wartungsvorrichtung für einen längsgestreckten, rohrförmigen Hohlkörper weist eine Dichtvorrichtung mit einem Adapter auf, der dichtend an den Rohrkörper ansetztbar ist und eine von dem Hohlkörper wegweisende Oberfläche zur Anlage der beweglichen Teile der Dichtvorrichtung aufweist und einen dem Zugriff auf den Hohlkörper dienenden Arbeitsbereich mit ausbildet. In den Arbeitsbereich wird ein Werkzeug eingeführt, das in Umfangsrichtung beweglich ist und nacheinander und nach einer Ummontage zwei gegeneinander versetzte Trennschnitte ausführt. Nach dem Herausnehmen eines aus dem rohrförmigen Hohlkörper herausgetrennten Rings wird in den Zwischenraum ein Führungskopf mit einer Absperrscheibe eingeführt, die gegenüber einer Schnittkante des geöffneten Rohrs abdichten soll. Zur Abdichtung wird eine axiale Andruckbewegung vorgesehen. An der Wartungsvorrichtung werden dann die Führungsmittel für die Trennschnitte in Umfangsrichtung folgende Bewegung voneinander gelöst und in axialer Richtung wirkende Stellschrauben für den Anpressdruck der Absperrscheibe betätigt. Diese Vorrichtung kann je nach Montagezustand, Arbeits- oder Zustellbewegungen nur in der einen oder der anderen von zwei zueinander senkrechten Bewegungen ausführen.

Es ist Aufgabe der vorliegenden Erfindung, eine Wartungsvorrichtung und ein Verfahren zum Einbringen eines Wartungszugangs zu schaffen, die gegenüber dem Stand der Technik verbessert sind.

Die Aufgabe wird gelöst durch eine Wartungsvorrichtung gemäß Anspruch 1, gemäß Anspruch 19 sowie ein Verfahren gemäß Anspruch 29.

Die erfindungsgemäße Wartungsvorrichtung zeichnet sich dadurch aus, dass eine (Unter-) Seite der Dichtvorrichtung eine zumindest teilweise gekrümmte Fläche ausbildet und insbesondere zur Einnahme und/oder Wahrung der Dichtstellung in Richtung längs des Hohlkörpers bewegbar ist. Die Krümmung der Fläche folgt der Krümmung der Rohrleitung, ist jedoch nicht notwendigerweise sondern nur bevorzugt dieser identisch. Die Form der der Rohrleitung zuzuwendenden Seite der Dichtvorrichtung ist somit der Form des rohrförmigen Hohlkörpers angepasst, was den Arbeitsbereich verkleinern und den Einfluss des Arbeitsbereichs auf eine fließende Strömung bei einer geöffneten Rohrleitung minimieren kann. Gleichzeitig wird für die Erstreckung der Dichtvorrichtung in einer Richtung senkrecht zu der Unterseite weniger Bauraum für Seitenwände beispielsweise eines der Dichtvorrichtung zugehörigen Adapters benötigt, so dass die Wartungsvorrichtung in der beschriebenen Ausbildung insgesamt kleiner baut. Dies ist vorteilhaft für erdverlegte Pipelines. Trotz etwaiger Bezugnahmen auf die zu wartende Rohrleitung bzw. den zu wartenden Hohlkörper ist dieser nicht Teil der erfindungsgemäßen Wartungsvorrichtung.

Die Bewegbarkeit der Dichtvorrichtung entlang der Längserstreckung des Hohlkörpers sowie in einer Richtung quer hierzu erhöht die Flexibilität der Dichtvorrichtung für die Einbringung von Wartungswerkzeugen. Beispielsweise wird die Dichtvorrichtung entlang der Längserstreckung des Adapters und/oder der Rohrleitung/des Hohlkörpers bewegt, während das Wartungswerkzeug in einem Winkel hierzu direkt in die Leitung einsetzbar ist.

Die erfindungsgemäße Wartungsvorrichtung ist hierbei mit einem Adapter als Teil der Dichtvorrichtung versehen, der dichtend an den Hohlkörper ansetzbar ist, eine von dem Hohlkörper weg weisende Oberfläche aufweist und einen dem Zugriff auf den Hohlkörper dienenden Arbeitsbereich mit ausbildet. Die Dichtvorrichtung weist somit entlang des Adapters und relativ zu diesem bewegbare Teile auf, die den Arbeitsbereich abdichten und freigeben können. Unter Arbeitsbereich wird hierbei insbesondere der Bereich verstanden, in dem mit Wartungswerkzeugen wie Schneid-, Fräs-, Messeinrichtungen auf die Rohrleitungswand eingewirkt wird und der bei geöffneter Rohrleitung bzw. geöffnetem Hohlkörper gegenüber der Umgebung abzudichten ist.

Insbesondere bei einer mit einer gekrümmten, von der Rohrleitung weg gerichteten Oberfläche des Adapters der Dichtvorrichtung bzw. von direkt auf der Rohrleitungsoberfläche bewegbaren Teilen der Dichtvorrichtung kann sich diese dicht an die Rohrleitung oder an den Adapter anschmiegen oder sich auf diesem abstützen, wodurch sich jeweils -gegebenenfalls unter Verwendung weiterer Dichtungsmittelein Dichtschluss zwischen Dichtvorrichtung und Rohrleitung ergibt. Die Dichtvorrichtung ist gerade bei einem flachen, gekrümmten, beispielsweise durch Schellen ausgebildeten Adapter auf ihrer Unterseite zumindest in dem Bereich, der entlang der den weiteren Teilen der Dichtvorrichtung zugewandten Seite des Adapters bewegbar ist und der bei Bewegung der Dichtvorrichtung entlang des Arbeitsbereiches bewegt werden kann, an den Adapter angepasst. Der Arbeitsbereich wird so besonders klein gehalten, was den Einfluss des fehlenden Wandungsteils einer bereits geöffneten Rohrleitung weiter minimiert.

In einer vorteilhaften Weiterbildung der Erfindung weist die Wartungsvorrichtung ein Gehäuse auf, welches zur Ausbildung zumindest einer Kammer vorgesehen ist, die mittels der Dichtvorrichtung von dem Arbeitsbereich getrennt werden kann. In einer solchen gegenüber der weiteren Umgebung der Wartungsvorrichtung druckdichten Kammer können Wartungswerkzeuge bevorratet werden, die bei Öffnung der Dichtvorrichtung unter weiterer Abdichtung der Umgebung in den röhrenförmigen Hohlkörper eingebracht werden können. Das Gehäuse dichtet die Öffnung der Wartungsvorrichtung somit gegenüber der Umgebung ab. Vorzugsweise ist das Gehäuse wenigstens teilweise um die Dichtvorrichtung herum angeordnet, wenn diese selbst ihrer Form nach dem zu wartenden Hohlkörper angepasst ist. In dem Gehäuse können Wartungswerkzeuge angeordnet werden, die aufgrund der Abdichtung des Gehäuses gegenüber einer Umgebung selbst dann in die Leitung einsetzbar sind, wenn diese noch in Betrieb ist. Hierbei kann das Gehäuse gegebenenfalls geflutet werden, so dass Mittel zum Leerpumpen oder Ablassen des Fluids am Gehäuse vorgesehen werden können. Der aufgrund der Ausbildung der Dichtvorrichtung und des Adapters gesparte Bauraum kann dem Gehäuse zu Gute kommen.

In einer weiteren vorteilhaften Weiterbildung der Erfindung weist das Gehäuse Gehäuseabschnitte auf, die zumindest zwei Kammern ausbilden. In diesen Kammern können unterschiedliche Wartungswerkzeuge vorgesehen werden, die über die Öffnung in den Hohlkörper eingeführt werden können. Die Kammern können sowohl auf bezüglich des zu wartenden Hohlkörpers gegenüberliegenden Seiten des Gehäuses angeordnet sein, sie können auch ineinander übergehen und teilweise aneinander angeordnet sein.

Vorteilhafterweise ist das Gehäuse an der Dichtvorrichtung angeordnet und insbesondere mit einer Außenseite versehen, die an der Dichtvorrichtung anliegt. Dichtvorrichtung und Gehäuse berühren sich zur Ausbildung eines Dichtschlusses gegebenenfalls unter Verwendung von zwischen den aneinander angeordneten Oberflächen befindlichen Dichtmitteln. Durch die Anlage des Gehäuses an der Dichtvorrichtung wird weiterer Bauraum gespart. Eine solche Bauraumersparnis wird in wenn auch verringerten Maße durch eine Wartungsvorrichtung erreicht, bei der das Gehäuse direkt an dem Adapter angeschlossen ist.

Besondere Vorteile weist weiterhin eine Wartungsvorrichtung auf, bei der das Gehäuse gegenüber dem Adapter und/oder weiteren Teilen der Dichtvorrichtung z.B. Gleitschalen, beweglich ist. Insbesondere einzelne Kammern können mit den hierin befindlichen Wartungswerkzeugen oder Vorrichtungen in eine Position bewegt werden -insbesondere durch Rotation des Gehäuses um eine Längsachse des Hohlkörpers- in der das Wartungswerkzeug optimal in die Öffnung einbringbar ist, oder in der das Wartungswerkzeug über vorzugsweise im Gehäuse vorzusehene Zugänge in dasselbe eingesetzt werden können. Je nach Ausbildung der Erfindung kann die Dichtvorrichtung hierbei auch zusammen mit dem Gehäuse auf dem Adapter bewegt werden.

Die Wartungsvorrichtung zeichnet sich vorteilhaft durch ein eine Kammer ausbildendes Gehäuse aus, welches einen verschiebbaren Einsatz umfasst, der zur Einbringung eines Wartungswerkzeugs in den Hohlkörper ausgebildet ist. Durch den Einsatz kann das Wartungswerkzeug bis in die Rohrleitung hineingeführt werden, so dass ein Verkanten in der Rohrleitung ausgeschlossen ist. Ein Wartungswerkzeug mit einem solchen Einsatz bildet ebenfalls einen Gegenstand nach Anspruch 1 vorteilhaft weiter, so dass die nachfolgend beschriebenen Weiterbildungen sowohl den Gegenstand nach Anspruch 1 als auch dem Gegenstand nach Anspruch 19 weiterbilden. Auch die bereits vorbeschriebenen Merkmale erfindungsgemäßer Weiterbildungen des Anspruchs 1 insbesondere hinsichtlich der Ausbildungen eines Gehäuses können einen Gegenstand gemäß Anspruch 19 vorteilhaft weiterbilden.

Der zur Einbringung eines Wartungswerkzeugs in den Hohlkörper ausgebildete Einsatz bildet gegebenenfalls die von dem Gehäuse gebildete Kammer mit aus und kann insbesondere bei geöffneter Dichtvorrichtung bis in das Rohr hinein verschiebbar sein. Insbesondere ist er ebenfalls röhrenförmig oder an eine Röhrenform angelehnt ausgebildet, um ein Wartungswerkzeug sicher zu beherbergen und zu führen. Der Einsatz kann hierbei ein Wartungswerkzeug, welches in die Rohrleitung eingesetzt werden soll, aufnehmen und der Positionierung derselben dienen.

Vorteilhafterweise ist der Einsatz zur Einführung eines Wartungswerkzeugs in Längsrichtung des Hohlkörpers ausgebildet. Der Einsatz umfasst hierfür einen unteren, in den Hohlkörper einführbaren Bereich, der eine Umlenkung des unter einem Winkel angesetzten Werkzeugs in Längsrichtung des Hohlkörpers bewirkt. Beispielsweise handelt es sich um einen J- und röhrenförmigen Einsatz, der mit seinem von der Rohrleitung weg gerichteten Teil rechtwinklig (bei einer an den Hohlkörper angesetzten Wartungsvorrichtung) von dem Hohlkörper absteht, bei Einsatz in die Rohrleitung jedoch mit dem anderen Ende das Werkzeug in die Leitung führen kann. Ein solches gekrümmtes Ende kann in einem verbreiterten Basisbereich des Gehäuses untergebracht werden, während der Rest des Gehäuses beispielsweise ebenfalls röhrenförmig ausgebildet ist. Auch drehbar in dem Gehäuse angeordnete Einsätze können Vorteile für das Einführen von Werkzeugen in den Hohlkörper aufweisen.

Zum möglichst unterbrechungsfreien Einsatz eines Wartungswerkzeugs, z.B. eines Reinigungsmolchs, in den Hohlkörper weist der Einsatz Durchströmöffnungen auf, durch die die Strömung nur geringfügig unterbrochen wird, wenn der Einsatz sich in der Leitung befindet. Die Öffnungen sind somit vorzugsweise in dem Bereich des Einsatzes, der in den Hohlkörper eingeführt wird, und verteilen sich über den Hohlkörperquerschnitt, d.h. in der Regel über den Rohrleitungsquerschnitt. Der Betrieb der Rohrleitung kann somit ohne wesentliche Unterbrechungen weiter fortgeführt werden.

Vorteilhafterweise ist die Wartungsvorrichtung mit zumindest zwei Einsätzen versehen, die zum Einbringen eines Wartungswerkzeugs in unterschiedliche Rohrleitungsrichtungen ausgebildet sind. Hierdurch können mittels ein und derselben an einem Hohlkörper angeordneten Wartungsvorrichtung Wartungsoperationen in beide Längsrichtungen des Hohlkörpers vorgenommen werden.

Besonders bevorzugt ist das Gehäuse als Adaptergehäuse mit einer Zugangsöffnung ausgebildet. An das Adaptergehäuse ist dann eine ein Wartungswerkzeug aufweisende, vorzugsweise transportable Kammer ansetzbar. Das Wartungswerkzeug ist dann wie bei den üblichen "hot tap"-Verfahren über das Gehäuse und einen etwaigen eine Führung bildenden Einsatz in die Rohrleitung einsetzbar. Der Einsatz hat hierbei vorzugsweise eine S- und röhrenförmige Form.

Die erfindungsgemäße Wartungsvorrichtung zeichnet sich dadurch aus, dass die Dichtvorrichtung bezogen auf die Oberfläche der Rohrleitung zumindest in eine erste Richtung und eine zweite quer zu der ersten verlaufende Richtung bewegbar ist. Die zumindest eine Funktionseinheit, die in einem einfachen Ausführungsbeispiel durch die Dichtvorrichtung selbst in Form einer Abdeckung gebildet wird, kann bezogen auf die Oberfläche des zu wartenden Hohlkörpers entlang eines zweidimensionalen Bewegungsmusters bewegt werden. Entlang des beispielsweise als Rohrleitung ausgebildeten Hohlkörpers kann eine ovale, nahezu rechteckige oder anders geformte Öffnung erzeugt werden, während gleichzeitig die Dichtvorrichtung den an die Wand des Hohlkörpers angrenzenden Arbeitsbereich weiter gegenüber der Umgebung des Hohlkörpers auf der der Rohrleitung bzw. des Hohlkörpers abgewandten Seite der Dichtvorrichtung abdichtet. Die Dichtvorrichtung selbst führt somit eine zweidimensionale Bewegung aus, die je nach Ausbildung der Funktionseinheit die Wartung des Hohlkörpers vereinfachen kann. Beispielsweise kann der sich flächig erstreckende Arbeitsbereich von verschiedenen Randbereichen her zugänglich gemacht werden kann, je nachdem, wie weit und wohin die bewegbaren Teile der Dichtvorrichtung entlang der Rohrleitung oder des Adapters verschoben wird.

Statt der aus dem Stand der Technik bekannten möglichen Bewegung der Dichtvorrichtung in eine Richtung, beispielsweise in Umfangsrichtung entlang einer Zylindermantelfläche, sowie in die hierzu direkt entgegen gesetzte Richtung kann die Dichtvorrichtung auch in eine Richtung quer zu dieser bzw. diesen beiden Richtungen verlaufende Richtung bewegt werden. Eine solche beispielsweise in der Ebene einer Zylindermantelfläche verlaufende zweidimensionale Bewegung kann als sich überlagerte Bewegung zweier rechtwinklig zueinander verlaufenden Bewegungen der Dichtvorrichtung in schräger Bahn erfolgen, sie kann auch aus einer ersten Bewegung und einer nachfolgenden zweiten, um 90° abgewinkelten Bewegung bestehen.

Ein weiterer Vorteil der erfindungsgemäßen Gestaltung liegt in der Minimierung des Arbeitsbereiches in nicht mehr nur einer sondern nun zwei Dimensionen entlang der Außenseite des zu wartenden Hohlkörpers, der nicht Teil der Wartungsvorrichtung ist. Statt für eine seitliche Bewegung der Funktionseinheit relativ zur Dichtvorrichtung den dann wieder abzudichtenden Arbeitsbereich zu vergrößern, wird die Dichtvorrichtung mitbewegt und der Arbeitsbereich bleibt gleich groß. Insbesondere bei einem bereits geöffneten Hohlkörper, in dem weiter Fluide transportiert werden, ergibt sich nur ein minimaler Einfluss auf die Strömung im Hohlkörper. Der Arbeitsbereich kann klein gehalten werden.

Der Adapter der erfindungsgemäßen Dichtvorrichtung kann beispielsweise auf eine Rohrleitung aufgeschraubt oder -geschweißt werden. Hierfür kann er auf seiner Unterseite zusätzliche Dichtungsmittel wie beispielsweise Gummidichtungen aufweisen, die einen Dichtschluss zur Rohrleitung unterstützen oder bewirken.

In einer Weiterbildung der Erfindung handelt es sich bei dem Adapter um einen auf die Rohrleitung aufsetzbaren Profilkörper, der auf seiner der Rohrleitung zugewandten Innenseite in etwa an den Außenumfang der Rohrleitung angepasst ist und überwiegend in Form einer Schale oder Schelle ausgebildet ist, d.h. seine Dicke ist insbesondere im Bereich zwischen Dichtvorrichtung und einer zu wartenden Rohrleitung klein im Vergleich zu seiner flächigen Erstreckung entlang der Dichtvorrichtung oder der Rohrleitung. Dies ist besonders vorteilhaft, um den sich mit zunehmender Dicke des Adapters vergrößernden Arbeitsbereich möglichst flach und damit klein zu halten. Die Form des Adapters kann sich der Form des Hohlkörpers sowohl auf der Adapterinnenseite als auch auf der Adapteraußenseite anpassen.

Besonders bevorzugt ist demnach eine Wartungsvorrichtung für einen als Pipeline ausgebildeten Hohlkörper, bei dem sowohl die bewegbaren Teile der Dichtvorrichtung und der Adapter als schalen- oder zylinderförmige Flächenelemente ausgebildet sind. Die Dichtvorrichtung kann hierbei zwecks verbesserter Montierbarkeit an eine Rohrleitung mehrteilig in einer Richtung quer zur Längserstreckung und/oder in Richtung der Längserstreckung des Hohlkörpers sein.

Weiterhin von Vorteil ist eine Wartungsvorrichtung, bei der die Dichtvorrichtung im Wesentlichen schalen- oder hohlzylinderförmig ausgebildet ist. Neben den vorbeschriebenen Vorteilen hinsichtlich der geringen Beeinflussung einer im Betrieb befindlichen Rohrleitung wird für einen solchen Wartungszugang nur wenig Bauraum benötigt. Die oftmals an erdverlegte Pipelines anzubringende Wartungsvorrichtung baut mit einer aus einer oder mehreren Gleitschalen ausgebildeten oder zumindest eine Gleitschale umfassende Dichtvorrichtung klein und unauffällig. Unter Gleitschale werden hierbei Teile der Dichtvorrichtung verstanden, die sich überwiegend flächig in Längs- bzw. Umfangsrichtung der zu wartenden Pipeline erstrecken, wobei jedoch auch umlaufende Hohlzylinderprofile wie beispielsweise eher flach ausgebildete Schellen als Gleitschale bezeichnet werden können. Als "schalenförmig" werden demnach gekrümmte Flächen von Profilkörpern bezeichnet, deren Erstreckung zumindest in eine Richtung entlang der Fläche der Leitung größer -vorzugsweise deutlich größer- ist als ihre Dicke. Als Gleitschale wird somit ein Profilkörper bezeichnet, der mit einer gekrümmten Fläche entlang und/oder im Extremfall direkt auf der Außenseite des Hohlkörpers oder des Adapters bewegbar ist.

Vorzugsweise ist demnach auch die von der Rohrleitung wegweisende Oberfläche des Adapters als Gleitoberfläche ausgebildet, um zusammen mit den weiteren Teilen der Dichtvorrichtung eine möglichst flach bauende Wartungsvorrichtung zu schaffen und auf weitere Dichtungsmittel gegebenenfalls verzichten zu können.

Die erfindungsgemäße Wartungsvorrichtung ist weiterhin verbessert, wenn die Funktionseinheit eine Schneidvorrichtung umfasst, die zur Einbringung eines Schnitts oder einer anderen Öffnung in den Hohlkörper ausgebildet ist.

Je nach Art der Bewegung der Dichtvorrichtung und der Schneidvorrichtung wird eine Öffnung beispielsweise durch Ausfräsen einer Kontur erzeugt. Hierbei sollte der ausgeschnittene Bereich anschließend aus der Rohrleitung entfernt werden. Alternativ oder ergänzend kann eine Öffnung durch Entfernen aneinander grenzender Bereiche durch Ausfräsen erzeugt werden. Hierbei müssen lediglich die Metallspäne aus der Leitung entfernt werden, beispielsweise durch einen Filter oder einen Magneten.

Das Einbringen einer Öffnung in den Hohlkörper über die Bewegung der Dichtvorrichtung, insbesondere in der Ausbildung als über die Rohrleitungsoberseite oder eine Oberfläche des Adapters gleitende Gleitschale, führt ebenfalls wieder zu einer geringen Arbeitsbereichsgröße und damit zu einer nur wenig beeinflussten Strömung in der Pipeline. Die in Richtung der flächigen Erstreckung der Dichtvorrichtung bzw. der Außenseite des Hohlkörpers gegenüber der Dichtvorrichtung im Wesentlichen unbewegliche Schneidvorrichtung wird im Arbeitsbereich von der Dichtvorrichtung geführt, wodurch Antriebsmittel für die Schneidvorrichtung für eine Bewegung in der Fläche nicht im von dem Fluid zugänglichen Bereich angeordnet werden müssen. Vielmehr reichen zur Bewegung der Schneidvorrichtung in der Fläche der Außenwand der Rohrleitung erfindungsgemäß für Bewegung der Dichtvorrichtung vorzusehende Antriebsmittel, die beispielsweise die manuelle über einen oder mehrere Griffe ermöglichte Bewegung der Gleitschale verbessern, aus. Alternativ kann natürlich die Schneidvorrichtung ersetzt oder ergänzt werden durch bzw. mit anderen Vorrichtungen wie z.B. Messeinheiten. Das Ausschneiden beliebiger und nicht nur kreisförmiger oder linearer Schnitte in die Rohrleitung ermöglicht die Herstellung anpassungsfähigerer Wartungszugänge bei gleichzeitigem Weiterbetrieb der Rohrleitung. Je nach Ausbildung eines gegebenenfalls vorhandenen Adapters kann dieser bei Einschneiden oder Einfräsen der Rohrleitung mit eingeschnitten und teilweise entfernt werden.

Eine erfindungsgemäße Wartungsvorrichtung ist vorteilhaft weitergebildet, wenn der Adapter mehrteilig in einer Richtung quer zur Längserstreckung und/oder in Richtung der Längserstreckung des Hohlkörpers ausgebildet ist. Eine solche mehrteilige Ausnehmung, insbesondere durch zwei schalen- und/oder ringförmige und zum Aufbringen auf eine Rohrleitung ausgebildete Segmente, die axial von der Rohrleitung beabstandet angeordnet sind, vergrößert den Einsatzbereich der erfindungsgemäßen Vorrichtung aufgrund größerer Anpassbarkeit.

Vorteilhafterweise kann der Arbeitsbereich der Wartungsvorrichtung zumindest teilweise durch wenigstens eine Ausnehmung des Adapters gebildet werden. Der beispielsweise von Teilen einer Schneidvorrichtung durchgreifbare Bereich ist durch die Form des Adapters genau auf die vorzunehmende Wartungsaktion anpassbar, was den abzudichtenden Bereich verkleinern und Wartungsvorrichtung und Wartung selbst sicherer gestalten kann.

Es kann erfindungsgemäß ebenfalls vorteilhaft sein, die Dichtvorrichtung hinsichtlich der den Arbeitsbereich abdichtenden Elemente mehrteilig auszubilden. Die Dichtvorrichtung weist dann mehrere Gleitschalenelemente auf, die durch Bewegung miteinander und/oder unabhängig voneinander die Funktionseinheit(en) führen können. Gleichzeitig können die einzelnen Teile der Dichtvorrichtung durch Auseinanderfahren die geschaffene oder bereits vorhandene Wartungsöffnung freigeben. Entsprechend ist es vorteilhaft, wenn die Wartungsvorrichtung dahingehend weitergebildet ist, dass die einzelnen Teile der Dichtvorrichtung insbesondere unabhängig voneinander wenigstens in zwei quer zueinander stehende Richtungen entlang der Außenseite des zu wartenden Hohlkörpers bewegbar sind. Alternativ können die einzelnen Teile der Dichtvorrichtung jedoch auch dergestalt miteinander gekoppelt sein, dass die Bewegung des oder der weiteren Teile, beispielsweise nach Art einer Irisblende, miteinander gekoppelt sind oder über die Bewegung eines Teils etwaige weitere Elemente mitbewegt werden.

Unter Bewegung wird hierbei vorzugsweise eine Bewegung in Richtung der flächigen Erstreckung der Gleitflächen oder der Außenseite der Rohrleitung verstanden. Denkbar sind jedoch auch Bewegungen der Dichtvorrichtung in eine Richtung senkrecht zu der Bewegung in der Ebene, beispielsweise um eine Schneidvorrichtung in Kontakt mit der Rohrleitungswand zu überführen.

Bei einer mehrteiligen Wartungsvorrichtung sind die Teile der Dichtvorrichtung vorteilhafterweise weiterhin mit wenigstens zwei einander zugewandten und insbesondere dichtungsoptimierten Anschlussseiten beispielsweise in Form von Flanschen versehen, um besonders gut dichtend aneinander festgelegt werden zu können.

Gemäß einer weiteren vorteilhaften Weiterbildung der erfindungsgemäßen Wartungsvorrichtung geht die Erstreckung des Adapters in Richtung längs des Hohlkörpers über die Erstreckung der weiteren Teile der Dichtvorrichtung hinaus. Die Dichtvorrichtung kann damit über Antriebsmittel angetrieben werden, die in Längsrichtung der Wartungsvorrichtung betrachtet zwischen Dichtvorrichtung und Adapter angeordnet werden können. Bei einem beispielsweise an die Rohrleitung bzw. Pipeline geschweißten Adapter können sich beispielsweise die Gleitschalen an diesem abstützen. Ein Maß, mit dem sich der Adapter über die in einer Geschlossenstellung befindlichen Gleitschalen hinaus erstreckt entspricht vorzugsweise einer Erstreckung der Öffnung in diese Erstreckungsrichtung. Der Adapter kann damit auch ausreichend Gleitflächen bereitstellen, um die Öffnung freizugeben.

Vorzugsweise weist die Wartungsvorrichtung zumindest einen Magnethalter auf. Beispielsweise auszuschneidende Teile der Rohrleitung oder Metallspäne können an einem Fallen in die Rohrleitung gehindert werden. Vorzugsweise ist der Magnethalter Teil der Dichtvorrichtung, um entsprechend mitbewegbar zu sein.

Für eine Wartung, bei der die Rohrleitung komplett durchtrennt werden muss, kann es vorteilhaft sein, wenn die Wartungsvorrichtung einen sich entlang der Dichtvorrichtung erstreckenden Rahmen zur Stabilisierung des Hohlkörpers aufweist. Dieser kann direkt an dem Adapter befestigt sein oder so ausgebildet sein, dass er sich neben dem Adapter oder der Dichtvorrichtung an die Rohrleitung anbringen lässt.

Die Betätigung und Überwachung der erfindungsgemäßen Vorrichtung ist weiterhin verbessert, wenn die Wartungsvorrichtung Sensoren zur Positionserkennung der Dichtvorrichtung umfasst, die weiterhin vorteilhafterweise über entsprechende Kommunikationsmittel insbesondere aus der Ferne abgefragt werden können und deren Information über zugehörige Anzeigemittel angezeigt werden können.

Die vorstehenden Aufgabe wird insbesondere unter Verwendung einer vorbeschriebenen Wartungsvorrichtung weiterhin durch ein Verfahren zur Wartung eines längsgestreckten, rohrförmigen Hohlkörpers nach dem Oberbegriff des Anspruchs 23 gelöst, welches sich dadurch auszeichnet, dass die Unterseite der in einer Dichtstellung den Arbeitsbereich abdichtenden Dichtvorrichtung der Form nach der Krümmung des Hohlkörpers angepasst wird und der Arbeitsbereich durch Verschieben zumindest eines gekrümmten Teils der Dichtvorrichtung entlang des Hohlkörpers von einer dem Hohlkörper abgewandten Seite der Dichtvorrichtung aus betrachtet freigegeben wird, um insbesondere ein Wartungswerkzeug in diesen Hohlkörper einführen oder aus diesem entnehmen zu können. Die Anpassung der Unterseite der Dichtvorrichtung verringert die Größe des Arbeitsbereiches und beeinflusst die Strömung weniger. Durch die Krümmung der Rohrleitung angepasste insbesondere schalenförmige Elemente der Dichtvorrichtung wird wenig Platz benötigt. Unter Anpassung ist hierbei eine Krümmung der Unterseite zu verstehen, die der Krümmung des Hohlkörpers folgt. Gleichzeitig müssen die Krümmungen nicht parallel verlaufen. Die dem Hohlkörper zugewandte Seite der Dichtvorrichtung kann einen anderen Krümmungsradius aufweisen als die Außenwand des Hohlkörpers.

Besonders bevorzugt wird die Öffnung durch Auseinanderbewegen einzelner Teile einer mehrteiligen Dichtvorrichtung zugänglich, so dass der Zugang zur Rohrleitung von der Mitte der Öffnung her erfolgen kann und/oder die Art der Öffnung variabler gesteuert werden kann.

Vorteilhaft ist ebenfalls ein erfindungsgemäßes Verfahren, welches sich weiterhin dadurch auszeichnet, dass zur Einbringung einer Öffnung eine ein auf eine Wandung des Hohlkörpers einwirkendes Schneidwerkzeug umfassende Funktionseinheit über eine Bewegung der Dichtvorrichtung bezogen auf die Oberfläche des Hohlkörpers sowohl in eine erste Richtung als auch quer zu dieser Richtung bewegbar ist und hierbei eine Wand des Hohlkörpers einschneidet, wobei der Arbeitsbereich gegenüber der Umgebung weiter abgedichtet wird.

Mit diesem Verfahren kann die Wartung einer Pipeline, insbesondere das Öffnen der Rohrleitungswand im laufenden Betrieb komfortabler gestaltet werden, da der für ein Einschneiden der Vorrichtung benötigte Arbeitsbereich selbst bei vollständigem Durchtrennen einer Rohrleitung während des laufenden Betriebs klein bleibt und der Einfluss auf die Strömung wie vorbeschrieben möglichst gering gehalten werden kann.

Entsprechend ist es vorteilhaft, dass das Schneidwerkzeug zur Einbringung einer Öffnung in den Hohlkörper über die Dichtvorrichtung sowohl in dessen Längsrichtung als auch quer zu dieser Richtung bewegbar ist und hierdurch bei einer bei einer entsprechenden Krümmung als Gleitschale ausgebildeten Dichtvorrichtung eine Bewegung auf einer Zylindermantelfläche vollführt.

Gemäß einem weiteren erfindungsgemäßen Verfahrensschritt kann es sich als vorteilhaft erweisen, die Bewegung der Schneidvorrichtung nacheinander erst in eine Richtung und dann in einer Richtung quer zu der ersten Richtung auszuführen.

Das erfindungsgemäße Verfahren ist weiterhin verbessert, wenn dieselbe Schneidvorrichtung durch Verfahren der Dichtvorrichtung in demselben Arbeitsbereich ohne Umpositionieren eines etwaigen vorzusehenen Adapters mehrere diskrete oder später zusammenzuführende Öffnungen in die Rohrleitungswand einbringt. Dies kann beispielsweise für das gleichzeitige Einbringen mehrerer Wartungs- oder Messinstrumente sinnvoll sein.

Das erfindungsgemäße Verfahren ist ebenfalls weiter verbessert, wenn das Wartungswerkzeug nicht alleine in die Leitung geschoben sondern über einen in die Rohrleitung bewegten Einsatz in diese eingebracht wird. Hierbei ist es besonders vorteilhaft, wenn der Einsatz das Wartungswerkzeug aus einer zur Längserstreckung des Hohlkörpers abgewinkelten Richtung in Richtung der Längserstreckung desselben führt.

Weiterhin kann es vorteilhaft sein, wenn das Wartungswerkzeug über eine mehrfache, vorzugsweise zweifache Umlenkung in die Rohrleitung eingebracht wird. Bei einer solchen Führung lässt sich das Wartungswerkzeug aus einer Vielzahl von Relativpositionen zum Hohlkörper in denselben einbringen.

Eine vorbeschriebene oder anhand der Figuren beschriebene Vorrichtung mit einem verschiebbaren Einsatz kann wie vorbeschrieben auch ohne eine eine gekrümmte Unterseite aufweisende Dichtvorrichtung gegenüber dem Stand der Technik vorteilhaft sein. Entsprechendes gilt für ein erfindungsgemäßes Verfahren, wobei sich die Vorteile gegenüber dem Stand der Technik durch die Verwendung des Einsatzes ergeben, die die Einbringung von Wartungswerkzeugen in rohrförmige Hohlkörper erheblich verbessern und insbesondere für in die Rohrleitung einzusetzende Werkzeuge wie Reinigungsmolche vorteilhaft sind. Hierfür bilden die zumindest teilweise in den Hohlkörper einführbaren Einsätze eine Führung aus, über die das Reinigungswerkzeug zumindest teilweise in Längsrichtung der Rohrleitung gerichtet wird.

Weiterhin ist eine Ausbildung der Erfindung vorteilhaft, bei der die Wartungsvorrichtung einen Einsatz aufweist, der um eine quer zur Längsachse der Rohrleitung stehende Achse verschwenkbar ist. Vorzugsweise weist das Gehäuse um den Einsatz eine zylinderförmige Gestalt auf, um nur den für eine Verschwenkung des Einsatzes benötigten Raum zur Verfügung zu stellen.

In einer weiteren vorteilhaften Ausgestaltung der Erfindung insbesondere ohne einen Adapter ist das Gehäuse direkt zur Befestigung auf dem Hohlkörper ausgebildet, was die Sicherheit der Wartungsvorrichtung erhöhen kann. Eine Art der Festlegung auf der Rohrleitung erfolgt durch Verschweißen.

Vorzugsweise werden bei Festlegung direkt auf der Rohrleitung Befestigungsflansche verwendet, die in Umfangsrichtung, d. h. um eine zu bearbeitende Rohrleitung herum an dem eigentlichen Gehäuse der Wartungsvorrichtung und in Längsrichtung des Hohlkörpers ausgerichtet angeordnet sind. Diese Art der Befestigung ermöglicht unter einer Minimierung der zu verwendenden beweglichen Teile eine sichere Festlegung auf der Rohrleitung.

Vorteilhafterweise ist die Dichtvorrichtung gemäß Anspruch 37 aus zumindest vier schalenförmigen Elementen aufgebaut, die sukzessive durch eine Öffnung des Gehäuses in dieses eingebracht werden können, wenn dieses sich in einer Befestigungsposition an einer Rohrleitung befindet. Die in Richtung der Längserstreckung verlaufende Länge der Dichtvorrichtung ist hierbei dergestalt ausgebildet, dass in einer Dichtposition eine Abdichtung des Arbeitsbereiches einerseits über das Gehäuse sowie andererseits über die die Rohrleitung in Umfangsrichtung begrenzende Dichtvorrichtung erfolgt. Durch die Verwendung einer die Rohrleitung komplett umschließenden Dichtvorrichtung, die insbesondere wenigstens einen an ihrer Umfangsseite wirkenden Dichtung aufweist, erfolgt eine sichere Abdichtung einer geöffneten Rohrleitung. Während die Dichtvorrichtung einenends auf ihrer äußeren Umfangsseite eine Dichtfläche oder Dichtung gegen das Gehäuse aufweist, kann die Dichtvorrichtung eine vorzugsweise quer zu dieser äußeren Umfangsseite verlaufende stirnseitige Dichtungsebene aufweisen, die zur Anlage an einer Seitenwand des Gehäuses ausgebildet ist. Wie der nachfolgenden Figurenbeschreibung zu entnehmen ist, ist hierbei die Dichtvorrichtung dergestalt verschiebbar in dem Gehäuse gelagert, dass die geringsten Anforderungen an einen Platzbedarf gestellt werden. Diese stirnseitige Dichtungsebene kann insbesondere in einer in einer Aufnahme des Gehäuse befindlichen Position den Arbeitsbereich bzw. die geöffnete Rohrleitung gegenüber der Umgebung und/oder dem Rest des Gehäuses abdichten.

Vorzugsweise ist die Dichtvorrichtung bei der vorgeschriebenen Ausbildung sowie allgemein durch einen durch das Gehäuse hindurchführbaren Stempel bewegbar. Die eine Antriebskraft ausübenden Elemente können somit außerhalb des Gehäuses und in einem zu Wartungszwecken oder Überwachungszwecken gut erreichbaren Bereich angeordnet sein. Der Stempel verläuft hierbei vorzugsweise in Längsrichtung der zu wartenden Rohrleitung, so dass die Dichtvorrichtung auch in diese Richtung verschiebbar ist.

Insbesondere an einer oder mehrerer der Schalen kann ein einen Dichtungssitz ausbildender Flansch angeordnet sein, der die Dichtung festlegt. Dieser Flansch kann weiterhin vorzugsweise eine Aufnahme zur Anordnung des Stempels aufweisen und befindet sich einenends der Dichtvorrichtung, so dass große Teile der Dichtvorrichtung direkt zur Abdichtung verwendet werden können.

Zur Einnahme einer optimalen Dichtstellung kann das Gehäuse wenigstens eine Führungsfläche aufweisen, die einen ordentlichen Dichtungssitz einer über die Führungsfläche in eine Aufnahme oder einen bestimmten Gehäusebereich einbringbare Dichtungsvorrichtung zur Einnahme einer Schließstellung gewährleistet. Diese Führungsfläche ist insbesondere Teil einer Aufnahme, in der die Dichtvorrichtung in ihrer Dichtstellung angeordnet ist.

Eine Ausfräsung eines Teils der zu wartenden Rohrleitung kann vorzugsweise über eine Fräsvorrichtung mit wenigstens zwei insbesondere zumindest teilweise nebeneinander angeordneten und gleichzeitig betreibbaren Fräswerkzeugen, bspw. in Form von Fräsköpfen, bewirkt werden. Über die gleichzeitige Verwendung mehrerer Fräswerkzeuge kann eine Rohrleitung schneller geöffnet werden. Eine horizontale Bewegbarkeit eines einzelnen Fräskopfes kann durch ein gleichzeitiges Verschwenken der Fräsköpfe um eine zentrale Achse der Fräsvorrichtung bewirkt werden.

Weitere Vorteile und Einzelheiten der Erfindung lassen sich der nachfolgenden Figurenbeschreibung entnehmen. Auf schematische Weise zeigt:
- Fig. 1: einen erfindungsgemäßen Gegenstand in einem Längsschnitt,
- Fig. 2: einen weiteren erfindungsgemäßen Gegenstand,

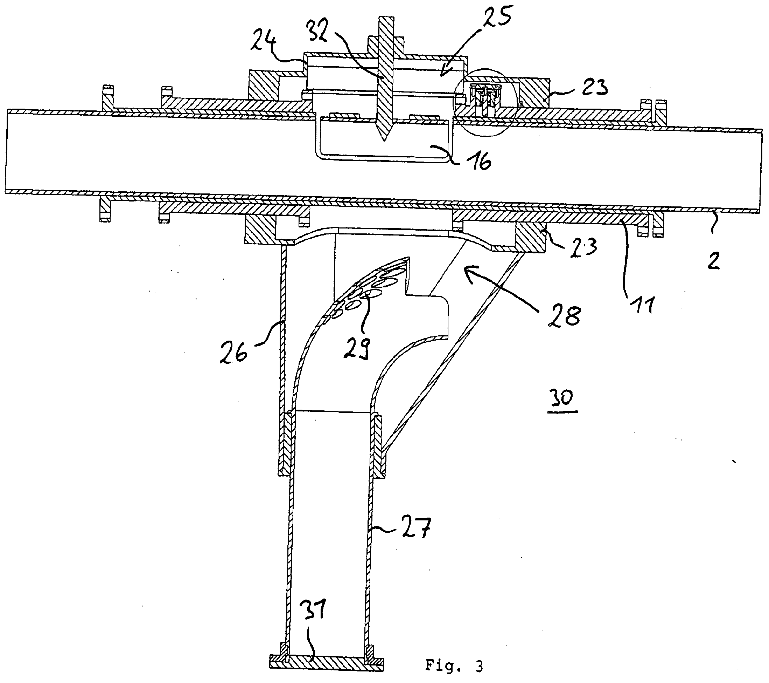

- Fig. 3: den Gegenstand nach Fig. 2 in einem Längsschnitt,

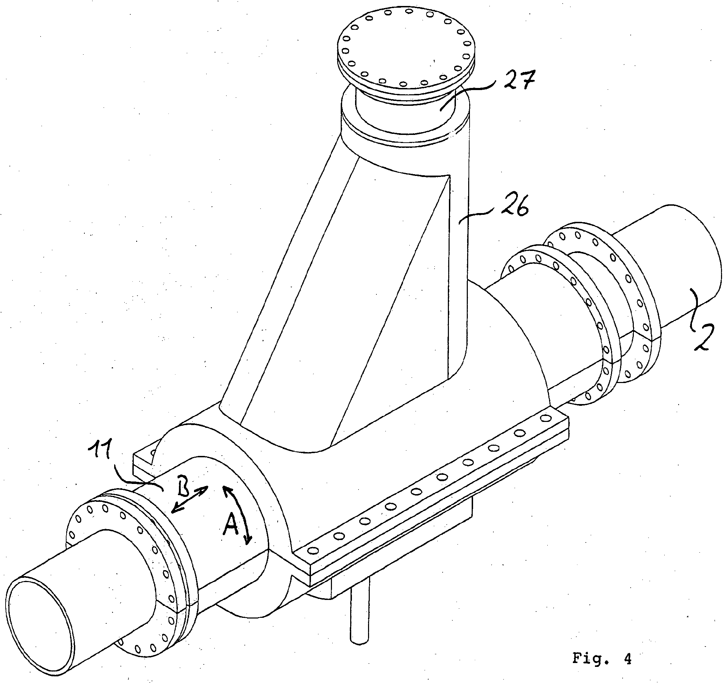

- Fig. 4: den Gegenstand nach Fig. 2 in einer anderen Betriebsstellung,
- Fig. 5: den Gegenstand nach Fig. 4 in einem Längsschnitt,
- Fig. 6: einen weiteren erfindungsgemäßen Gegenstand,

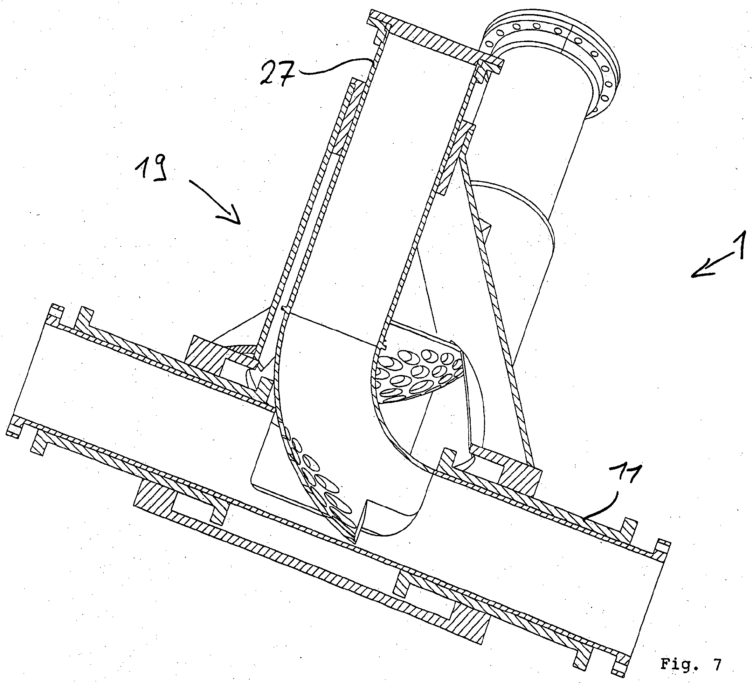

- Fig. 7: den Gegenstand nach Fig. 6 in einem Längsschnitt,
- Fig. 8: einen weiteren erfindungsgemäßen Gegenstand,
- Fig. 9: eine perspektivische Darstellung des Gegenstands nach Fig. 8 in einer teilweise aufgebrochenen Ansicht,
- Fig. 10: den Gegenstand nach Fig. 8 in einem Längsschnitt,
- Fig. 11: den Gegenstand nach Fig. 12 in einem Längsschnitt,
- Fig. 12: einen weiteren erfindungsgemäßen Gegenstand,
- Fig. 13: einen weiteren erfindungsgemäßen Gegenstand in einer perspektivischen Ansicht,
- Fig. 14: den Gegenstand nach Fig. 13 in einem Längsschnitt.
- Fig. 15: eine weitere erfindungsgemäße Wartungsvorrichtung,
- Fig. 16: einen Ausschnitt gemäß des Gegenstands nach Fig. 15,
- Fig. 17: eine weitere Teilansicht eines erfindungsgemäßen Gegenstands gemäß Fig. 15,
- Fig. 18: eine Detailansicht eines weiteren erfindungsgemäßen Gegenstadns.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

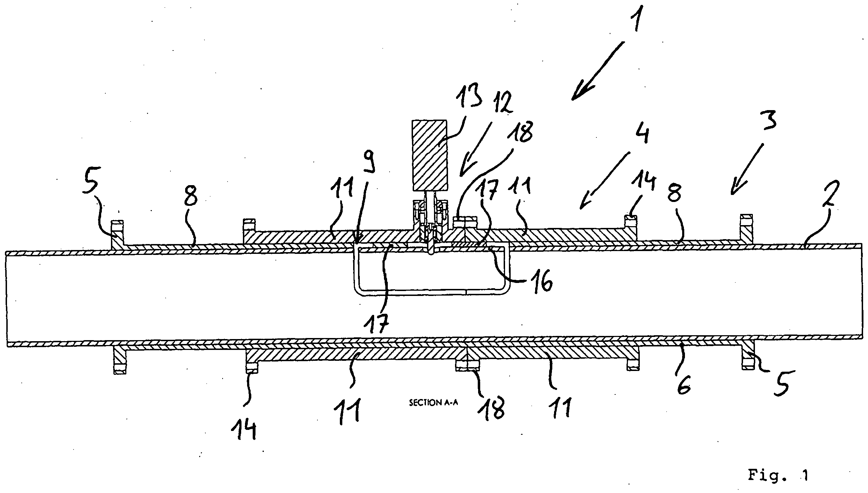

In Fig. 1 ist eine erfindungsgemäße Wartungsvorrichtung 1 gezeigt, die bereits auf einem nicht zur Erfindung gehörenden Hohlkörper 2 in Form einer Rohrleitung/Pipeline angeordnet ist. Die Wartungsvorrichtung 1 umfasst einen mehrteiligen Adapter 3 mit äußeren Befestigungsflanschen 5 als Teil einer entsprechend mehrteiligen Dichtvorrichtung 4.

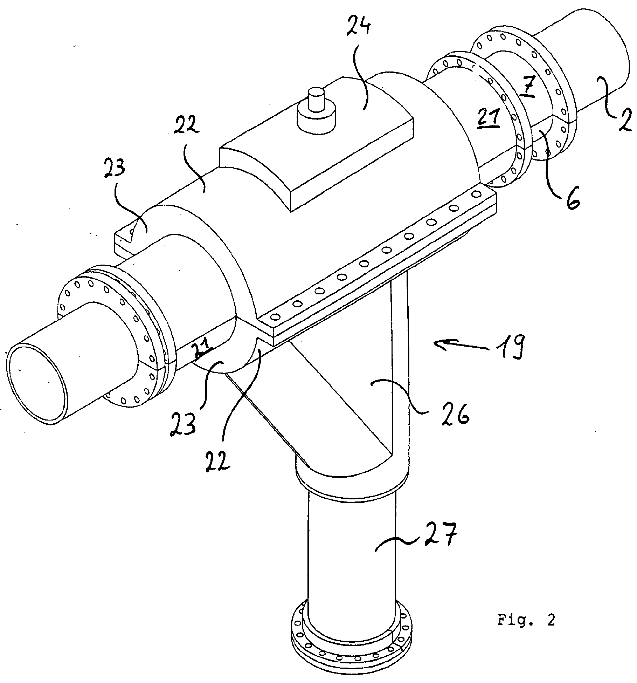

Der Adapter 3 umfasst einen in der Fig. 1 unteren Teil 6 nach Art eines hohlen Halbzylinders (vgl. Fig. 2). Dieser ist der Form nach auf die zu wartende Rohrleitung 2 angepasst und auf dieser befestigt. Die von der Rohrleitung 2 weg weisende Oberfläche 7 des Adapters 3 ist als Gleitoberfläche für weitere Teile der Dichtvorrichtung 4 ausgebildet. Die Rohrleitung 2 ist bei dem gezeigten Ausführungsbeispiel vollständig umfasst.

Der Adapter 3 weist zwei obere mit Abstand voneinander angeordnete Teile 8 auf, während der untere Teil 6 einteilig ist. Zusammen bilden Teil 6 und die Teile 8 einen Arbeitsbereich 9 aus, der von der Dichtvorrichtung 4 gegenüber der Umgebung abgedichtet werden kann und in Fig. 1 abgedichtet ist.

Die Dichtvorrichtung 4 selbst umfasst weiter vier im Wesentlichen der Form nach als halbe Hohlzylinder ausgebildete Gleitschalen 11, die mit ihrer Innenseite über die Oberfläche 7 gleiten können. Gegebenenfalls kann zur Verbesserung der Abdichtung des Arbeitsbereiches zwischen den beiden Gleitoberflächen, d.h. der Unterseite der Gleitschalen 11 und der den Teilen 6 und 8 zuzuordnenden Oberfläche 7 Dichtungsmittel angeordnet werden.

Als Funktionseinheit 12 umfasst die Dichtvorrichtung 4 eine Schneidvorrichtung mit einem in einem Gehäuse 13 angeordneten Motor, beispielsweise als Hydraulik- oder Elektromotor ausgebildet. Die Funktionseinheit 12 ist über die Dichtvorrichtung 4 bewegbar. In der Fig. 1 ist zu erkennen, wie die Schneidvorrichtung zur Erstellung einer Öffnung in der Rohrwand von der Dichtvorrichtung 4 geführt wurde.

Die vier schalenförmigen Teile 11 der Dichtvorrichtung 4 sind außenseitig ebenfalls mit Befestigungsflanschen 14 versehen. Zwischen den Flanschen 5 und 14 können beispielsweise Antriebsmittel zur Bewegung der Dichtvorrichtung angeordnet werden.

Ersichtlich ist der Arbeitsbereich 9 sehr klein gehalten, wodurch der Rohrleitungsquerschnitt auch nach einem möglichen Entfernen des ausgeschnittenen Wandungsteils 16 nahezu unverändert bleibt. Der Wandungsteil 16 wird durch Magnethalter 17 an einem Hineinfallen in die Rohrleitung 2 gehindert.

Die beiden in der Figur linken und rechten Teile der Dichtvorrichtung 4 sind über Befestigungsflansche 18 aneinander festlegbar. Zur sicheren Festlegung nach erfolgter Wartung können die beiden Hohlzylinder über die Flansche 18 beispielsweise aneinander geschraubt werden.

Die in Fig. 2 gezeigte Weiterbildung der erfindungsgemäßen Wartungsvorrichtung nach Fig. 1 umfasst des Weiteren ein an die von der Rohrleitung 2 weg weisende Außenseite angesetztes Gehäuse 19. Das Gehäuse 19 ist über nicht näher gezeigte Antriebsmittel ebenfalls verschiebbar auf der als Gleitoberfläche ausgebildeten Außenseite 21 der Dichtvorrichtung 4. Das Gehäuse kann demnach genauso wie die Dichtvorrichtung 4 gegenüber dem auf der Rohrleitung 2 befestigten Adapter 3 um die Rohrleitung 2 herum und entlang dieser bewegt werden.

Das Gehäuse umfasst zwei Teile 22 , die mit ihren Seiten 23 dicht an der Außenseite 21 anliegen und wenigstens eine Kammer ausbilden, in der ein Reinigungsmolch oder andere Wartungswerkzeuge bevorratet werden können. Bei dem Gegenstand nach Fig. 2 umfasst das in der Fig. 2 obere Teil 22 einen Gehäuseabschnitt 24, der eine erste Kammer 25 mit ausbildet. Der untere Teil 22 weist einen größeren Profilkörper 26 auf, der zusammen mit einem Einsatz 27 eine weitere Kammer 28 ausbildet. Die Kammern 25 und 28 sind gegenüber der Umgebung 30 der Wartungsvorrichtung abdichtbar. Die Kammer 28 wird über einen mit einem Deckel 31 verschließbaren Zugang erreicht.

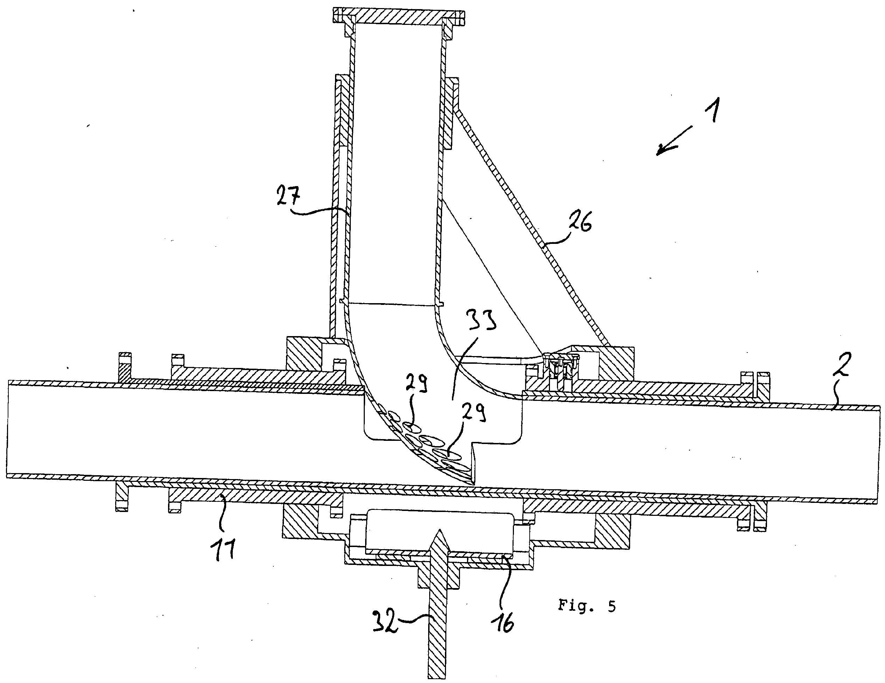

Die Gehäuseabschnitte 22 befinden sich hinsichtlich der Rohrleitung auf gegenüberliegenden Seiten. Die zugehörigen Kammern 25 und 28 und die hierin befindlichen Wartungswerkzeuge werden durch Verdrehen oder Verschwenken des Gehäuses 19 in den Bereich der Rohrleitungsöffnung gebracht. Beispielsweise kann ein mit einer pfeilförmigen Spitze versehener Stempel 32, der in dem Gehäuseabschnitt 24 gelagert ist, einem Festhalten und einer Entnahme des zu entfernenden Wandungsteils 16 dienen. Erfindungsgemäß können auch andere Wartungswerkzeuge wie beispielsweise Messeinrichtungen in dem Gehäuse bevorratet und/oder als Funktionseinheit bereitgehalten werden. Hierfür wird über die Schneidvorrichtung ein Loch in den Wandungsteil 16 geschnitten. Durch Auseinanderfahren der Gleitschalen 11 der Dichtvorrichtung 4 und Einbringen der Spitze in den Arbeitsbereich und in den Wandungsteil 16 wird der Teil 16 fixiert. Anschließend kann die Schneidvorrichtung den Wandungsteil 16 vollumfänglich aus der Rohrleitung 2 ausschneiden, woraufhin dieser wie in Fig. 5 gezeigt durch Herausziehen des Stempels 32 in die Kammer 25 verbracht und so der Rohrleitung 2 entnommen werden kann. Im Vergleich der Figuren wird deutlich, dass die Schneidvorrichtung Wandungsteile 16 mit beliebigen Konturen aus der Rohrleitung 2 ausschneiden kann.

Zum Einbringen des Einsatzes 27 in die Rohrleitung 2 wird das Gehäuse in die in Fig. 5 gezeigte Stellung um 180° verdreht und der Einsatz durch die Öffnung und den Arbeitsbereich in die Rohrleitung geführt. Gegebenenfalls kann zwischenzeitlich die Dichtvorrichtung 4 durch Zusammenfahren die Rohrleitung 2 wieder abgedichtet haben, um den Einfluss auf die Strömung in der Pipeline möglichst gering zu halten.

Nachdem der Gehäuseabschnitt 26 in Position gebracht und die Dichtvorrichtung 4 gegebenenfalls wieder geöffnet wurde, wird das gekrümmte und in der Fig. 5 untere Ende 33 in die Rohrleitung gebracht. Das Ende 33 dient als Führung und ist soweit gekrümmt, dass ein in dem Einsatz 27 befindliches, nicht gezeigtes Wartungswerkzeug in die Leitung geführt wird.

Das Ende 33 weist einen Querschnitt auf, der in etwa dem Rohrleitungsquerschnitt entspricht. Zum Einbringen des Einsatzes 27 ist die Rohrleitung 2 hierfür bis zur ihrer Hälfte geöffnet worden. Die Einsatzwand geht aufgrund der Krümmung in die Rohrleitungswand über bzw. schmiegt sich an diese an.

Während des Einbringens des Einsatzes in die Rohrleitung 2 kann diese weiter betrieben werden. Die Kammer 28 ist hierbei ausreichend druckdicht, so dass das in der Leitung befindliche Fluid nicht entweichen kann. Aufgrund von Durchströmöffnungen 29, die in dem in die Rohrleitung 2 einzubringenden Abschnitt des Einsatzes 27 vorgesehen sind, wird die Strömung auch in der in Fig. 5 gezeigten Position des Einsatzes so wenig wie möglich beeinflusst. Statt der Durchströmöffnungen kann das gebogene Ende 33 des Einsatzes 27 beispielsweise aus gebogenen Streben bestehen, die den freien Rohrleitungsquerschnitt weniger beeinflussen.

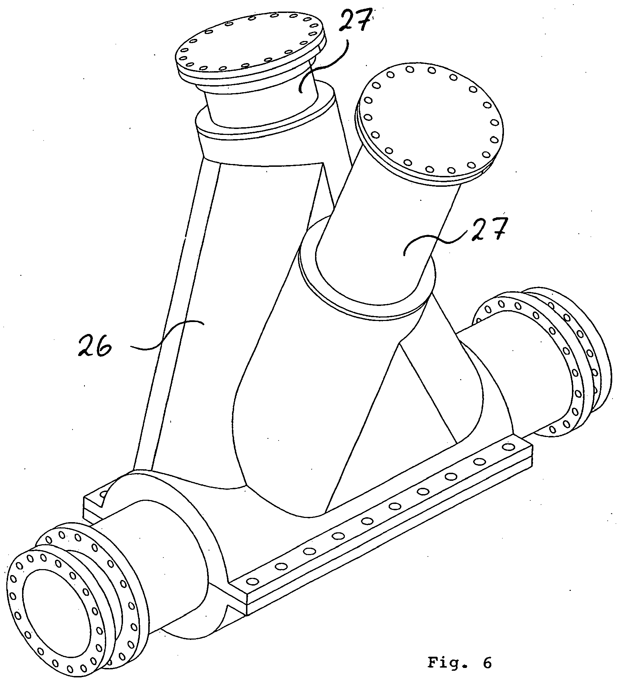

Die in Fig. 6 gezeigte Weiterbildung der Erfindung umfasst zwei Einsätze 27, die dicht aneinanderliegende Kammern ausbilden und in unterschiedlichen Rohrleitungsrichtungen weisende Enden 33 aufweisen. Der Einsatz eines Wartungswerkzeugs kann somit in beide Rohrleitungsrichtungen erfolgen. Für die nacheinander erfolgende Einbringung der Einsätze 27 in die Rohrleitung 2 kann das Gehäuse 19 entsprechend verdreht werden. Zusätzlich könnte bei dem gezeigten Ausführungsbeispiel über einen weiteren Gehäuseabschnitt ein Stempel 32 gemäß Fig. 5 bevorratet werden.

Mehrere der gezeigten Vorrichtungen sind besonders dafür geeignet, in Abständen entlang einer Rohrleitung 2 angebracht zu werden und sowohl die Entnahme als auch das Einsetzen eines die Rohrleitung 2 wartenden Wartungswerkzeugs zu vereinfachen. Für Zeiten, in denen die Rohrleitung 2 nicht gewartet wird, wird diese mittels der Dichtvorrichtung 4 mit ihren Hohlzylinderhalbschalen 11 in einer annähernd der ursprünglichen Form ohne Wartungsöffnung entsprechenden Weise abgedichtet.

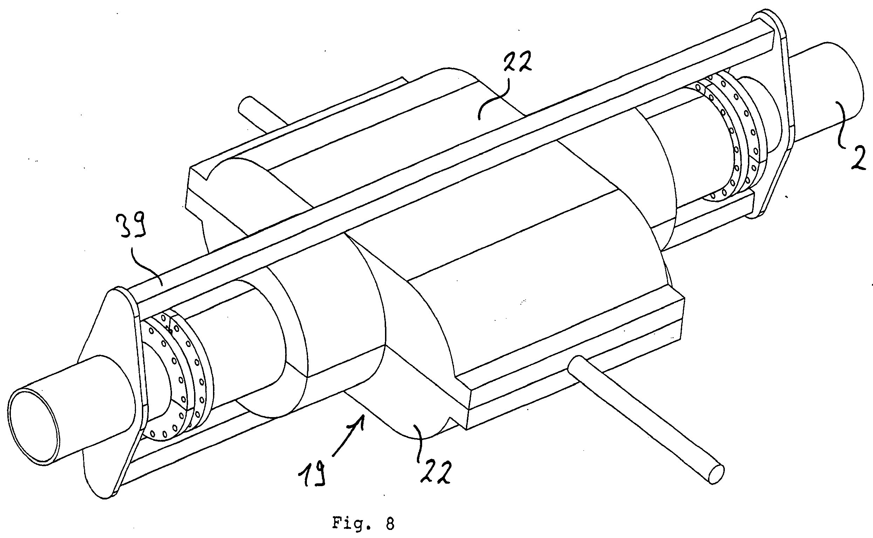

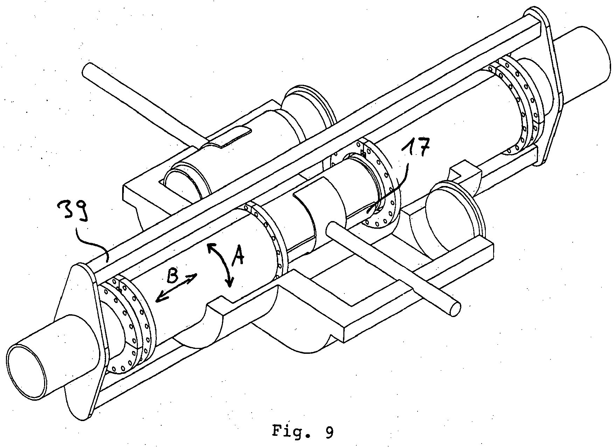

Die erfindungsgemäße Wartungsvorrichtung nach Fig. 8 ist insbesondere bei einer vollständigen Durchtrennung einer Rohrleitung 2 geeignet. Das Gehäuse 19 weist wiederum zwei gegenüberliegende Kammern 25 und 28 auf. Ein erster quer zur Rohrleitung 2 verschiebbarer und in dem Gehäuse 19 gelagerter Entnahmestempel 34 ist an den ausgeschnittenen oder auszuschneidenden Wandungsteil 16 ansetzbar und kann diesen aus der Rohrleitung in die Kammer 28 überführen. Hierfür können zusätzliche Magnethalter 17 vorgesehen werden (vgl. Fig. 9). Nach einem Verschluss der Rohrleitung über die Dichtvorrichtung 4 ist der Teil 16 dann über die Luke 36 entnehmbar.

Über einen Einsatzstempel 37 ist ein Einsatz 38 in die Rohrleitung einbringbar. Hierbei kann es sich um einen Einsatz 38 mit einem darin befindlichen Wartungswerkzeug handeln, es kann sich aber auch um ein in die Rohrleitung 2 mittels einer als Schweißanlage ausgebildeten Funktionseinheit 12 einsetzbares Stück neuer Rohrleitung 2 handeln. Die Schweißanlage könnte hierbei über die Dichtvorrichtung 4 um die Rohrleitung 2 herum geführt werden und die Rohrleitungsteile miteinander verschweißen. Alternativ kann ein Wartungswerkzeug in den Teil 16 eingebracht werden und dieser wieder auf dem umgekehrten Weg in die Leitung 2 eingesetzt werden. Der in der Fig. 8 gezeigte und an Rohrleitung angesetzte Rahmen 39 dient der Stabilisierung der Rohrleitung 2.

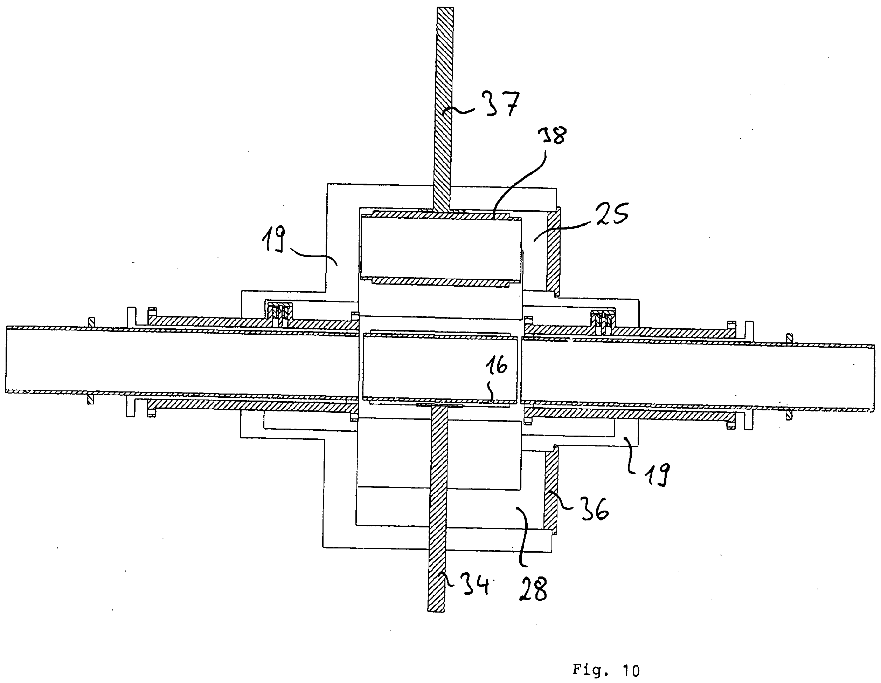

Im Vergleich zur Wartungsvorrichtung nach Fig. 1 ist die in der Fig. 10 gezeigte Ausführungsform mit zwei Funktionseinheiten 12 in Form von Schneidvorrichtungen versehen. Nach erfolgter Wartung kann ein Teil der Funktionseinheit 12 entfernt werden, wie durch den in Fig. 10 fehlenden Motorgehäuseteil 13 angedeutet wird, und das Gehäuses kann abgebaut werden, so dass die Wartungsvorrichtung im Wesentlichen nur noch aus Adapter 3, Dichtvorrichtung 4 und gegebenenfalls einem Rahmen 39 zur Stabilisierung besteht.

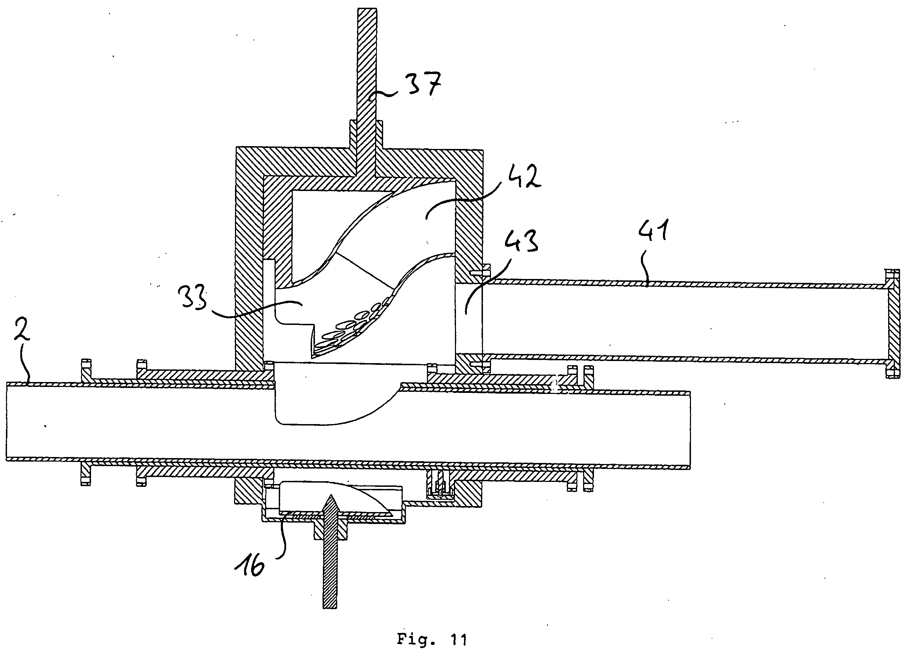

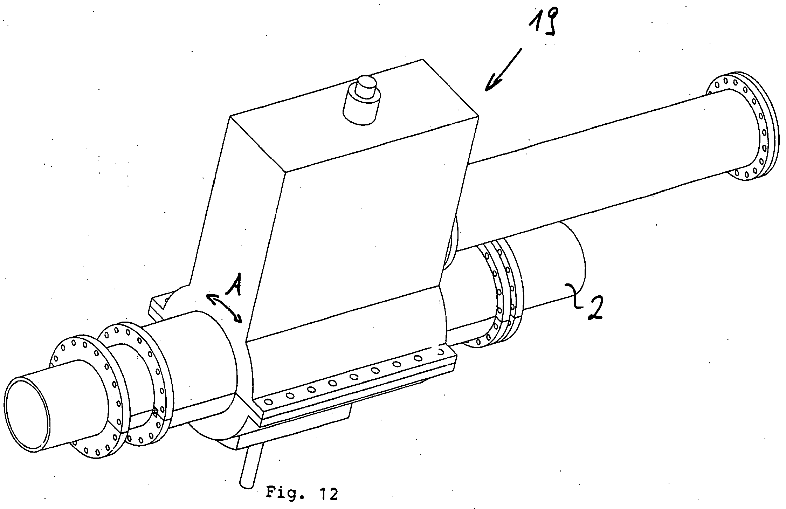

Die weitere, in den Fig. 11 und 12 gezeigte erfindungsgemäße Vorrichtung 1 ist insbesondere für den Einsatz längerer Wartungswerkzeuge geeignet. Ein solches kann in einer Nichtgebrauchsstellung in einer röhrenfömigen an das Gehäuse ansetzbaren Aufbewahrungsvorrichtung 41 vorrätig gehalten werden. Nach dem Einschneiden der Rohrleitung 2, einem Entfernen des Wandungsteils 16 und Verdrehen des Gehäuses 19, um die Kammer 28 mit der Öffnung in Kontakt zu bringen, kann der eine S-förmige Führung ausbildende Einsatz 27 über einen Einsatzstempel 37 mit seinem unteren Ende 33 in die Rohrleitung 2 gebracht werden. Das obere Ende 42 liegt dann an einer Zugangsöffnung 43, durch die das Wartungswerkzeug in die Rohrleitung gebracht werden kann. Mittels solcher einfach oder doppelt gebogener Einsätze kann die erfindungsgemäße Wartungsvorrichtung 1 an die jeweils vor Ort befindlichen Platzverhältnisse angepasst werden und ein Wartungswerkzeug aus verschiedenen Relativpositionen zu einer Rohrleitung 2 in diese geführt werden. Das Gehäuse 19 fungiert in diesem Fall als Adaptergehäuse.

Die Dichtvorrichtung 4 und das Gehäuse 19 können jeweils in eine Richtung A entlang des Umfangs der Rohrleitung 2 bewegt werden. Eine auch gleichzeitige oder zu einem anderen Zeitpunkt ausgeführte Bewegung ist ebenfalls in Richtung B in Längsrichtung des Adapters 3 bzw. der Rohrleitung 2 möglich. Dies gilt auch für die durch die Doppelpfeile A, B angedeuteten, entgegengesetzten Richtungen.

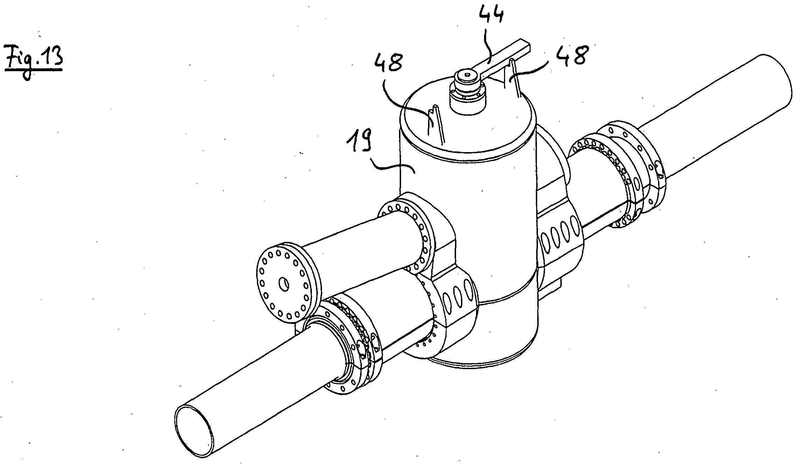

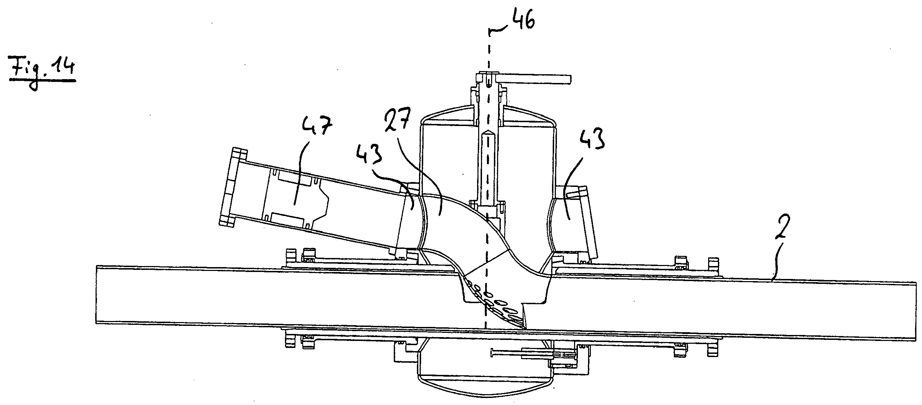

Gemäß dem Ausführungsbeispiel nach Fig. 13 ist das Gehäuse 19 mit einem zylinderförmigen Querschnitt versehen. Eine Hebelmechanik 44 dient der Verschwenkung des in Fig. 14 gezeigten Einsatzes 27 um eine Achse 46, um über Zugangsöffnungen 43 ein angedeutetes Wartungswerkzeug 47, beispielsweise einen Reinigungsmolch, ausgehend von der Wartungsvorrichtung in beide Richtungen in die Pipeline 2 einführen oder aus einer der beiden Richtungen kommend aus der Pipeline entnehmen zu können. Anschläge 48 können die Verschwenkung begrenzen. Die Hebelmechanik 44 ist entlang der Achse 46 beweglich, um den Einsatz 27 in die Rohrleitung oder aus dieser heraus zu bewegen.

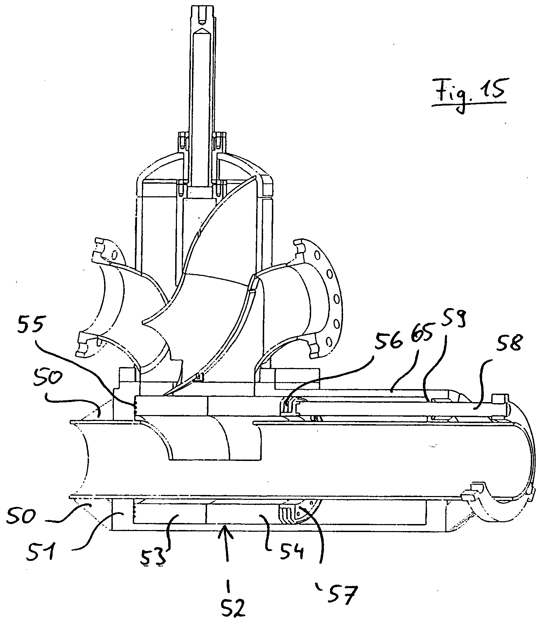

In der Fig. 15 ist ein weiterer erfindungsgemäßer Gegenstand gezeigt, bei dem das Gehäuse über Befestigungsflansche 50 und direkt an seinen Stirnseiten 51 in einer über Verschweißen bewegten Dichtstellung an der Rohrleitung angeordnet ist. In der Figur befindet sich die Dichtvorrichtung 52 in ihrer Schließstellung. Hierbei ist die Dichtvorrichtung, deren Hauptkörper aus vier Schalenelementen aufgebaut ist, von denen lediglich zwei Schalenkörper 53 und 54 gezeigt sind, bei einenends an einer Stirnseite 55 des Gehäuses an, die Teil einer Aufnahme ist. Anderenends ist die Dichtvorrichtung umfangsseitig gegenüber dem Gehäuse mittels Dichtungen 56 abgedichtet. Diese sind in einem Flansch 57 angeordnet, der gleichzeitig auch eine Aufnahme für einen Stempel 58 ausbildet. Dieser greift durch das Gehäuse hindurch, wobei mittels einer Dichtung 59 eine Dichtung gegenüber der Umgebung bewirkt wird. In Umfangsrichtung des Gehäuses bzw. der Rohrleitung sind weitere, nicht dargestellte Stempel 58 angeordnet.

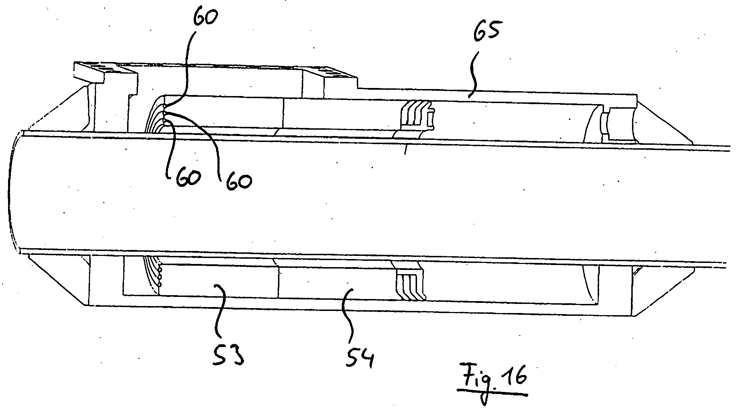

Die stirnseitig an der Seite 55 in Anlage befindliche Dichtfläche der Schale 53 weist insgesamt drei Dichtungsringe 60 auf, die in zugehörigen Nuten der Dichtvorrichtung verlaufen (Fig. 16).

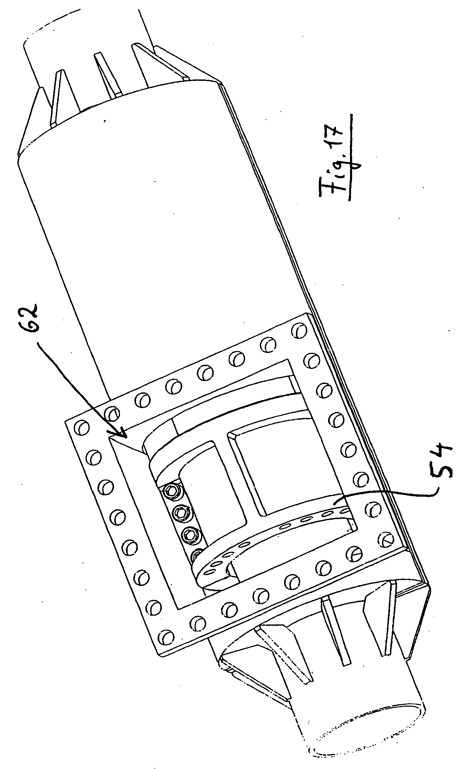

Der Figur 17 ist zu entnehmen, dass die Dichtvorrichtung sukzessive bei Aufbau der Wartungsvorrichtung in das Gehäuse einfügbar ist, wobei die Gesamtlänge in Rohrleitungsrichtung betrachtet, größer ist als die entsprechende Länge einer Öffnung 62 (ebenfalls wieder in Rohrleitungslängsrichtung betrachtet).

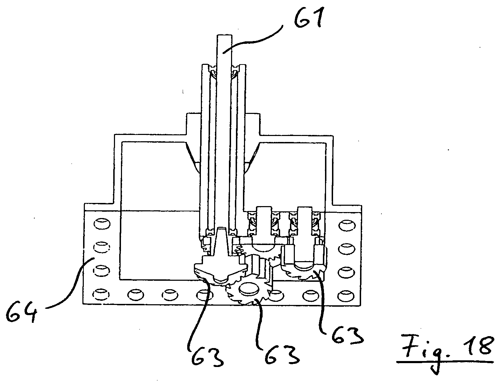

In der Öffnungsstellung der Dichtvorrichtung kann über eine in der Fig. 18 gezeigte Fräsvorrichtung, die über einen die Öffnung 62 verschließenden Flansch 64 an einen Gehäuseteil 65 der Wartungsvorrichtung anschließbar ist, eine Ausfräsung eines Rohrwandbereiches vorgenommen werden, wobei über eine Drehung der Fräsvorrichtung bzw. zumindest von Teilen der Fräsvorrichtung, die eigene Fräsköpfe 63 aufweisen, eine Öffnung erzeugt wird. Hierbei wird durch einen die zentrale Drehachse umfassenden Antriebsstrang 61 die Antriebskraft über Zahnräder auf die endseitig an die Fräsvorrichtung gelagerten weiteren Fräser 63 übertragen.

## Patentansprüche

1. Wartungsvorrichtung für einen längsgestreckten, rohrförmigen Hohlkörper (2), der zur Leitung eines Fluids ausgebildet ist, mit einer Dichtvorrichtung (4), die zur Abdichtung eines Arbeitsbereichs (9) gegenüber einer Umgebung (30) des Hohlkörpers (2) vorgesehen ist die mit einer dem Hohlkörper (2) zuzuwendenden Seite eine zumindest teilweise gekrümmte Fläche ausbildet und zur Einnahme der Dichtstellung bezogen auf die Oberfläche (7) des Hohlköpers (2) entlang dieser in eine erste Richtung (A) oder in eine zweite, quer zu der ersten verlaufenden Richtung (B) bewegbar ist, wobei die Dichtvorrichtung mit einem Adapter (3) versehen ist, der dichtend an den Hohlkörper (2) ansetzbar ist, der eine von dem Hohlkörper (2) weg weisende Oberfläche (7) aufweist und einen dem Zugriff auf den Hohlkörper (2) dienenden Arbeitsbereich (9) ausbildet, wobei ein bewegliches Teil (11) der Dichtvorrichtung entlang des Adapters (3) unter Wahrung eines Dichtschlusses bewegbar ist, **dadurch gekennzeichnet**, die Wartungsvorrichtung derart ausgebildet, dass das bewegliche Teil (11) der Dichtvorrichtung (4) über den Arbeitsbereich (9) sowohl in der ersten wie in der zweiten Richtung (B) derart bewegbar ist, dass die zumindest eine Funktionseinheit (12) bezogen auf eine Oberfläche des zu wartenden Hohlkörpers (2) entlang eines zweidimensionalen Bewegungsmusters bewegbar ist, wobei die zweidimensionale Bewegung als sich überlagerte Bewegung zweier rechtwinklig zueinander verlaufender Bewegungen erfolgt.

2. Wartungsvorrichtung nach Anspruch 1, **dadurch gekennzeichnet, dass** die Dichtvorrichtung (4) im Wesentlichen schalen- oder hohlzylinderförmig ausgebildet ist.

3. Wartungsvorrichtung nach einem der Ansprüche 1 oder 2, **dadurch gekennzeichnet, dass** die Oberfläche (7) des Adapters (3) als Gleitoberfläche ausgebildet ist.

4. Wartungsvorrichtung nach einem der Ansprüche 1 bis 3, **dadurch gekennzeichnet, dass** der Arbeitsbereich (9) zumindest teilweise durch wenigstens eine Ausnehmung des Adapters (3) gebildet wird.

5. Wartungsvorrichtung nach einem der Ansprüche 1 bis 4, **dadurch gekennzeichnet, dass** die Wartungsvorrichtung als Funktionseinheit (12) eine Schneidvorrichtung umfasst, die zur Einbringung einer Öffnung in den Hohlkörper (2) ausgebildet und insbesondere Teil der Dichtvorrichtung (4) ist.

6. Wartungsvorrichtung nach einem der vorhergehenden Ansprüche, **gekennzeichnet durch** einen sich entlang der Dichtvorrichtung (4) erstreckenden Rahmen (39) zur Stabilisierung des Hohlkörpers (2).

7. Wartungsvorrichtung nach einem der vorhergehenden Ansprüche, **gekennzeichnet durch** ein Gehäuse (19), welches zur Ausbildung zumindest einer Kammer (25,28) vorgesehen ist, die mittels der Dichtvorrichtung (4) von dem Arbeitsbereich (9) getrennt werden kann.

8. Wartungsvorrichtung nach Anspruch 7, **dadurch gekennzeichnet, dass** das Gehäuse (19) an der Dichtvorrichtung (4) angeordnet ist.

9. Wartungsvorrichtung nach Anspruch 7 oder 8, **dadurch gekennzeichnet, dass** das Gehäuse (19) gegenüber der Dichtvorrichtung (4) beweglich ist.

10. Wartungsvorrichtung nach einem der Ansprüche 7 bis 9, **dadurch gekennzeichnet, dass** das Gehäuse (19) an dem Adapter (3) angeordnet ist.

11. Wartungsvorrichtung nach einem der Ansprüche 7 bis 10, **dadurch gekennzeichnet, dass** das Gehäuse (19) einen verschiebbaren Einsatz (27) umfasst, der zur Einbringung eines Wartungswerkzeugs in den Hohlkörper (2) ausgebildet ist.

12. Wartungsvorrichtung nach Anspruch 11, **dadurch gekennzeichnet, dass** der Einsatz (27) eine wenigstens teilweise quer zum Hohlkörper (2) verlaufende Längserstreckung aufweist, dergestalt, dass ein in den Einsatz (27) einzubringendes Wartungswerkzeug in seiner Längserstreckung gegenüber der Längserstreckung des Hohlkörpers (2) abgewinkelt ist.

13. Wartungsvorrichtung nach Anspruch 11 oder 12, **dadurch gekennzeichnet, dass** der Einsatz (27) in seiner Längsrichtung gekrümmt ausgebildet ist.

14. Wartungsvorrichtung nach einem der Ansprüche 11 bis 13, **dadurch gekennzeichnet, dass** der Einsatz (27) Durchströmöffnungen (29) aufweist.

15. Wartungsvorrichtung nach einem der Ansprüche 11 bis 14 mit zumindest zwei Einsätzen (27), **dadurch gekennzeichnet, dass** die Einsätze (27) zum Einbringen oder Entnehmen eines Wartungswerkzeugs in unterschiedliche Rohrleitungsrichtungen ausgebildet sind.

16. Wartungsvorrichtung nach einem der Ansprüche 7 bis 15, **gekennzeichnet durch** zumindest zwei Kammern (25,28) mit ausbildende Gehäuseabschnitte (24,26).

17. Wartungsvorrichtung nach einem der Ansprüche 11 bis 16, **dadurch gekennzeichnet, dass** der Einsatz (27) um eine vorzugsweise quer zur Längsachse der Rohrleitung stehende Achse (46) verschwenkbar ist.

18. Wartungsvorrichtung nach Anspruch 7, **dadurch gekennzeichnet, dass** das Gehäuse zur direkten Befestigung auf dem Hohlkörper ausgebildet ist.

19. Wartungsvorrichtung nach einem der Ansprüche 7 bis 18, **dadurch gekennzeichnet, dass** die Dichtvorrichtung aus zumindest vier schalenförmigen Elementen aufgebaut ist.

20. Wartungsvorrichtung nach einem der Ansprüche 7 bis 19, **dadurch gekennzeichnet, dass** die Dichtvorrichtung zur Dichtung gegenüber dem Gehäuse wenigstens eine an ihrer äußeren Umfangsseite wirkende Dichtung aufweist.

21. Wartungsvorrichtung nach Anspruch 20, **dadurch gekennzeichnet, dass** die Dichtung über einen Dichtungssitz aufweisenden Flansch an dem Rest der Dichtvorrichtung befestigbar ist.

22. Wartungsvorrichtung nach einem der Ansprüche 7 bis 21, **dadurch gekennzeichnet, dass** die Dichtvorrichtung über einen durch das Gehäuse hindurchführbaren Stempel bewegbar ist.

23. Verfahren zur Wartung eines längsgestreckten, rohrförmigen Hohlkörpers (2), der zur Leitung eines Fluids ausgebildet ist, unter Verwendung einer Wartungsvorrichtung (1) nach einem der vorherigen Ansprüche, wobei eine Dichtvorrichtung (4) an den Hohlkörper (2) dichtend angebracht wird, dergestalt, dass ein Arbeitsbereich (9) zur Einbringung einer Öffnung in den Hohlkörper (2) gebildet wird, so dass der Arbeitsbereich (9) von der Dichtvorrichtung (4) gegenüber einer Umgebung des Hohlkörpers (2) abgedichtet ist, und wobei die Dichtvorrichtung (4) entlang des Hohlkörpers (2) in einer ersten Richtung (A) oder quer zu dieser in einer zweiten Richtung (B) bewegbar ist, wobei die Dichtvorrichtung (4) über einen Adapter (3) dem Hohlkörper (2) dicht angepasst wird und der Arbeitsbereich (9) durch Verschieben zumindest eines gekrümmten beweglichen Teils (11) der Dichtvorrichtung (4) entlang des Hohlkörpers (2) auf einer dem Hohlkörper (2) abgewandten Seite des Adapters (3) freigegeben wird, **dadurch gekennzeichnet, dass** das bewegliche Teil (11) über den Arbeitsbereich (9) sowohl in der ersten wie in der zweiten Richtung (B) derart bewegt wird, dass zumindest eine Funktionseinheit (12) bezogen auf eine Oberfläche des zu wartenden Hohlköpers (2) entlang eines zweidimensionalen Bewegungsmusters bewegt wird.

24. Verfahren nach Anspruch 23, **dadurch gekennzeichnet, dass** zur Einbringung einer Öffnung eine ein auf eine Wandung des Hohlkörpers (2) einwirkendes Schneidwerkzeug umfassende Funktionseinheit (12) über eine Bewegung der Dichtvorrichtung (4) bezogen auf die Oberfläche (7) des Hohlkörpers (2) sowohl in eine erste Richtung (A) als auch quer zu dieser in eine zweite Richtung (B) bewegbar ist und hierbei eine Wand des Hohlkörpers (2) einschneidet, wobei der Arbeitsbereich (9) gegenüber der Umgebung (30) weiter abgedichtet wird.

25. Verfahren nach Anspruch 24, **dadurch gekennzeichnet, dass** die Bewegung der Schneidvorrichtung nacheinander erst in eine Richtung (A) und dann in einer Richtung quer zu der ersten Richtung (B) ausgeführt wird.

26. Verfahren nach einem der Ansprüche 23 bis 25, **dadurch gekennzeichnet, dass** die Öffnung durch Auseinanderbewegen einzelner Teile (11) der mehrteiligen Dichtvorrichtung (4) zugänglich wird.

27. Verfahren nach einem der Ansprüche 23 bis 26, **dadurch gekennzeichnet, dass** ein Wartungswerkzeug über einen in den Hohlkörper (2) bewegten Einsatz (27) in diesen eingebracht wird.

28. Verfahren nach Anspruch 27, **dadurch gekennzeichnet, dass** der Einsatz (27) das Wartungswerkzeug aus einer zur Längserstreckung des Hohlkörpers (2) abgewinkelten Richtung in dem Hohlkörper (2) in Richtung der Längserstreckung desselben führt.

29. Verfahren nach Anspruch 27 oder 28, **dadurch gekennzeichnet, dass** das Wartungswerkzeug eine zweifache Umlenkung erfährt, um aus einer vorzugsweise parallel zu dem Hohlkörper (2) ausgerichteten ersten Position durch die Wartungsvorrichtung (1) in den Hohlkörper (2) zu gelangen.

## Claims

1. Maintenance device for an elongate, tubular hollow body (2) which is designed to conduct a fluid, comprising a sealing device (4) which is provided for sealing a work region (9) against a surrounding area (30) of the hollow body (2) and which, by means of a side to be turned towards the hollow body (2), forms an at least partly curved face and can be moved relative to the surface (7) of the hollow body (2) along said body in a first direction (A) or in a second direction (B) which is transverse to the first direction to assume the sealing position, the sealing device being provided with an adapter (3) which can be sealingly placed on the hollow body (2), has a surface (7) which faces away from the hollow body (2) and forms a work region (9) used to access the hollow body (2), a movable part (11) of the sealing device being movable along the adaptor (3) whilst maintaining a tight seal, **characterised in that** the maintenance device is formed such that the movable part (11) of the sealing device (4) can be moved over the work region (9) in both the first and the second direction (B) such that at least one functional unit (12) can be moved along a two-dimensional movement pattern relative to a surface of the hollow body (2) to be maintained, the two-dimensional movement taking place as a superimposed movement of two movements which are perpendicular to one another.

2. Maintenance device according to claim 1, **characterised in that** the sealing device (4) is substantially shell-shaped or hollow cylindrical.

3. Maintenance device according to either claim 1 or claim 2, **characterised in that** the surface (7) of the adapter (3) is formed as a sliding surface.

4. Maintenance device according to any of claims 1 to 3, **characterised in that** the work region (9) is formed at least in part by at least one recess in the adapter (3).

5. Maintenance device according to any of claims 1 to 4, **characterised in that** the maintenance device comprises a cutting device as a functional unit (12), which cutting device is designed to make an opening in the hollow body (2) and is in particular part of the sealing device (4).

6. Maintenance device according to any of the preceding claims, **characterised by** a frame (39) extending along the sealing device (4) for stabilising the hollow body (2).

7. Maintenance device according to any of the preceding claims, **characterised by** a housing (19), which is intended to form at least one chamber (25, 28) that can be separated from the work region (9) by means of the sealing device (4).

8. Maintenance device according to claim 7, **characterised in that** the housing (19) is arranged on the sealing device (4).

9. Maintenance device according to either claim 7 or claim 8, **characterised in that** the housing (19) can be moved relative to the sealing device (4).

10. Maintenance device according to any of claims 7 to 9, **characterised in that** the housing (19) is arranged on the adapter (3).

11. Maintenance device according to any of claims 7 to 10, **characterised in that** the housing (19) comprises a slidable insert (27), which is designed to introduce a maintenance tool into the hollow body (2).

12. Maintenance device according to claim 11, **characterised in that** the insert (27) has a longitudinal extension which extends transversely to the hollow body (2) at least in part, in such a way that the longitudinal extension of a maintenance tool to be introduced into the insert (27) is angled with respect to the longitudinal extension of the hollow body (2).

13. Maintenance device according to either claim 11 or 12, **characterised in that** the insert (27) is curved in its longitudinal direction.

14. Maintenance device according to any of claims 11 to 13, **characterised in that** the insert (27) comprises throughflow openings (29).

15. Maintenance device according to any of claims 11 to 14 comprising at least two inserts (27), **characterised in that** the inserts (27) are designed to introduce or to remove a maintenance tool in different pipeline directions.

16. Maintenance tool according to any of claims 7 to 15, **characterised by** housing portions (24, 26) forming at least two chambers (25, 28).

17. Maintenance device according to any of claims 11 to 16, **characterised in that** the insert (27) can be pivoted about an axis (46) which is preferably transverse to the longitudinal axis of the pipeline.

18. Maintenance device according to claim 7, **characterised in that** the housing is designed to be attached directly to the hollow body.

19. Maintenance device according to any of claims 7 to 18, **characterised in that** the sealing device is constructed from at least four shell-shaped elements.

20. Maintenance device according to any of claims 7 to 19, **characterised in that** the sealing device comprises at least one seal acting on its outer peripheral side for sealing against the housing.

21. Maintenance device according to claim 20, **characterised in that** the seal can be attached to the remainder of the sealing device by means of a flange comprising a seal seat.

22. Maintenance device according to any of claims 7 to 21, **characterised in that** the sealing device can be moved by means of a ram that can be guided through the housing.

23. Method for maintaining an elongate, tubular hollow body (2), which is designed to conduct a fluid, using a maintenance device (1) according to any of the preceding claims, a sealing device (4) being sealingly fitted to the hollow body (2) such that a work region (9) for making an opening in the hollow body (2) is formed, so the work region (9) of the sealing device (4) is sealed against a surrounding area of the hollow body (2), and the sealing device (4) being movable along the hollow body (2) in a first direction (A) or in a second direction (B) which is transverse to said first direction, the sealing device (4) being tightly fitted to the hollow body (2) by means of an adapter (3) and the work region (9) being released by sliding at least one curved movable part (11) of the sealing device (4) along the hollow body (2) on a side of the adapter (3) which faces away from the hollow body (2), **characterised in that** the movable part (11) can be moved over the work region (9) in both the first and the second direction (B) such that at least one functional unit (12) is moved along a two-dimensional movement pattern relative to a surface of the hollow body (2) to be maintained.

24. Method according to claim 23, **characterised in that**, in order to make an opening, a functional unit (12) comprising a cutting tool which acts on a wall of the hollow body (2) can be moved, by means of a movement of the sealing device (4) relative to the surface (7) of the hollow body (2), in both a first direction (A) and a second direction (B) which is transverse to the first direction, and in so doing cuts into a wall of the hollow body (2), the work region (9) being further sealed against the surrounding area (30).

25. Method according to claim 24, **characterised in that** the movement of the cutting device is performed successively first in a direction (A) and then in a direction which is transverse to the first direction (B).

26. Method according to any of claims 23 to 25, **characterised in that** the opening can be accessed by moving apart individual parts (11) of the multipart sealing device (4).

27. Method according to any of claims 23 to 26, **characterised in that** a maintenance tool is introduced into the insert (27) by means of said insert which is moving into the hollow body (2).

28. Method according to claim 27, **characterised in that** the insert (27) guides the maintenance tool in the hollow body (2) in the direction of the longitudinal extension of said body from a direction angled with respect to the longitudinal extension of the hollow body (2).

29. Method according to either claim 27 or claim 28, **characterised in that** the maintenance tool is doubly deflected in order to enter the hollow body (2) through the maintenance tool (1) from a first position which is preferably parallel to the hollow body (2).

## Revendications

1. Dispositif d'entretien d'un corps creux (2) de forme tubulaire et allongé qui est adapté pour conduire un fluide, le dispositif comprenant un dispositif d'étanchéité (4) qui est destiné à rendre une zone de travail (9) étanche par rapport à un environnement (30) du corps creux (2), qui forme, avec un côté tourné vers le corps creux (2), une surface au moins partiellement incurvée et qui est mobile par rapport à la surface (7) du corps creux (2) le long de celle-ci dans une première direction (A) ou dans un seconde direction (B), transversale à la première, pour occuper la position d'étanchéité, le dispositif d'étanchéité étant pourvu d'un adaptateur (3) qui peut être placé de façon étanche sur le corps creux (2), qui possède une surface (7) tournée à l'opposé du corps creux (2) et qui forme une zone de travail (9) servant à accéder au corps creux (2), une partie mobile (11) du dispositif d'étanchéité étant mobile le long de l'adaptateur (3) pendant l'entretien d'une terminaison étanche, **caractérisé en ce que** le dispositif d'entretien est conçu de telle sorte que la partie mobile (11) du dispositif d'étanchéité (4) est mobile sur la zone de travail (9) aussi bien dans le premier sens que dans le second sens (B) et que l'au moins une unité fonctionnelle (12) est mobile par rapport à une surface du corps creux (2) à entretenir selon un motif de déplacement en deux dimensions, le déplacement en deux dimensions étant effectué sous la forme d'un déplacement superposé de deux déplacements perpendiculaires l'un à l'autre.

2. Dispositif d'entretien selon la revendication 1, **caractérisé en ce que** le dispositif d'étanchéité (4) a sensiblement une forme de coque ou de cylindre creux.

3. Dispositif d'entretien selon l'une des revendications 1 ou 2, **caractérisé en ce que** la surface (7) de l'adaptateur (3) est réalisée sous la forme d'une surface de glissement.

4. Dispositif d'entretien selon l'une des revendications 1 à 3, **caractérisé en ce que** la zone de travail (9) est formée au moins partiellement par au moins un évidement de l'adaptateur (3).

5. Dispositif d'entretien selon l'une des revendications 1 à 4, **caractérisé en ce que** le dispositif d'entretien comporte comme unité fonctionnelle (12) un dispositif de coupe qui est adapté pour être introduit dans une ouverture ménagée dans le corps creux (2) et qui fait notamment partie du dispositif d'étanchéité (4).

6. Dispositif d'entretien selon l'une des revendications précédentes, **caractérisé par** un cadre (39) qui s'étend le long du dispositif d'étanchéité (4) et qui est destiné à la stabilisation du corps creux (2).

7. Dispositif d'entretien selon l'une des revendications précédentes, **caractérisé par** un boîtier (19) qui est prévu pour former au moins une chambre (25, 28) qui peut être séparée de la zone de travail (9) au moyen du dispositif d'étanchéité (4).

8. Dispositif d'entretien selon la revendication 7, **caractérisé en ce que** le boîtier (19) est disposé au niveau du dispositif d'étanchéité (4).

9. Dispositif d'entretien selon la revendication 7 ou 8, **caractérisé en ce que** le boîtier (19) est mobile par rapport au dispositif d'étanchéité (4).

10. Dispositif d'entretien selon l'une des revendications 7 à 9, **caractérisé en ce que** le boîtier (19) est disposé sur l'adaptateur (3).

11. Dispositif d'entretien selon l'une des revendications 7 à 10, **caractérisé en ce que** le boîtier (19) comporte un insert coulissant (27) qui est conçu pour introduire un outil d'entretien dans le corps creux (2).

12. Dispositif d'entretien selon la revendication 11, **caractérisé en ce que** l'insert (27) présente une extension longitudinale au moins en partie transversale au corps creux (2) de telle sorte qu'un outil d'entretien, à insérer dans l'insert (27), est coudé dans son extension longitudinale par rapport à l'extension longitudinale du corps creux (2).

13. Dispositif d'entretien selon la revendication 11 ou 12, **caractérisé en ce que** l'insert (27) est incurvé dans sa direction longitudinale.

14. Dispositif d'entretien selon l'une des revendications 11 à 13, **caractérisé en ce que** l'insert (27) comporte des orifices de passage d'écoulement (29).

15. Dispositif d'entretien selon l'une des revendications 11 à 14, pourvu d'au moins deux inserts (27), **caractérisé en ce que** les inserts (27) sont adaptés pour introduire ou retirer un outil d'entretien dans différentes directions d'une canalisation.

16. Dispositif d'entretien selon l'une des revendications 7 à 15, **caractérisé par** des sections de boîtier (24, 26) formant au moins deux chambres (25, 28).

17. Dispositif d'entretien selon l'une des revendications 11 à 16, **caractérisé en ce que** l'insert (27) peut pivoter sur un axe (46) de préférence transversal à l'axe longitudinal de la canalisation.

18. Dispositif d'entretien selon la revendication 7, **caractérisé en ce que** le boîtier est configuré pour être fixé directement sur le corps creux.

19. Dispositif d'entretien selon l'une des revendications 7 à 18, **caractérisé en ce que** le dispositif d'étanchéité se compose d'au moins quatre éléments en forme de coupe.

20. Dispositif d'entretien selon l'une des revendications 7 à 19, **caractérisé en ce que** le dispositif d'étanchéité au moins une garniture d'étanchéité, qui agit sur son côté périphérique extérieur, pour assurer l'étanchéité par rapport au boîtier.

21. Dispositif d'entretien selon la revendication 20, **caractérisé en ce que** la garniture d'étanchéité peut être fixée au reste du dispositif d'étanchéité par le biais d'une bride comporte un siège de garniture d'étanchéité.

22. Dispositif d'entretien selon l'une des revendications 7 à 21, **caractérisé en ce que** le dispositif d'étanchéité peut être déplacé par un piston qui peut traverser le boîtier.

23. Procédé d'entretien d'un corps creux (2) de forme tubulaire et allongé qui est adapté pour conduire un fluide, par utilisation d'un dispositif d'entretien (1) selon l'une des revendications précédentes, un dispositif d'étanchéité (4) étant monté de façon étanche sur le corps creux de façon à former une zone de travail (9) pour ménager un orifice dans le corps creux (2) de sorte que la zone de travail (9) est rendue étanche par le dispositif d'étanchéité (4) par rapport à un environnement du corps creux (2), et le dispositif d'étanchéité (4) est mobile le long du corps creux (2) dans une première direction (A) ou transversalement à celle-ci dans une seconde direction (B), le dispositif d'étanchéité (4) étant adapté de façon étanche au corps creux (2) par le biais d'un adaptateur (3) et la zone de travail (9) étant libérée par déplacement d'au moins une partie mobile incurvée (11) du dispositif d'étanchéité (4) le long du corps creux (2) du côté de l'adaptateur (3) qui est opposé au corps creux (2), **caractérisé en ce que** la partie mobile (11) est déplacé sur la zone de travail (9) aussi bien dans la première direction que dans la seconde direction (B) de sorte qu'au moins une unité fonctionnelle (12) est déplacée par rapport à une surface du corps creux (2) à entretenir selon un motif de déplacement à deux dimensions.

24. Procédé selon la revendication 23, **caractérisé en ce que**, pour ménager un orifice, une unité fonctionnelle (12), qui comporte un outil de coupe qui agit sur une paroi du corps creux (2), est mobile par une mouvement du dispositif d'étanchéité (4) par rapport à la surface (7) du corps creux (2) aussi bien dans une première direction (A) que transversalement à celle-ci dans une second direction (B), et découpe ainsi une paroi du corps creux (2), la zone de travail (9) étant en outre rendue étanche par rapport à l'environnement (30).

25. Procédé selon la revendication 24, **caractérisé en ce que** le mouvement du dispositif de coupe est effectué successivement tout d'abord dans une première direction (A) puis dans une direction (B) transversale à la première direction.

26. Procédé selon l'une des revendications 23 à 25, **caractérisé en ce que** l'orifice est accessible par écartement de parties individuelles (11) du dispositif d'étanchéité (4) en plusieurs parties.

27. Procédé selon l'une des revendications 23 à 26, **caractérisé en ce qu'**un outil d'entretien est introduite dans le corps creux (2) par le biais d'un insert (27) déplacé dans celui-ci.

28. Procédé selon la revendication 27, **caractérisé en ce que** l'insert (27) guide l'outil d'entretien depuis une direction, coudée par rapport à l'extension longitudinale du corps creux (2), dans le corps creux (2) en direction de l'extension longitudinale de celui-ci.

29. Procédé selon la revendication 27 ou 28, **caractérisé en ce que** l'outil d'entretien est soumis à une double déviation pour aller d'une première position, orientée de préférence parallèlement au corps creux (2), jusque dans le corps creux (2) à travers le dispositif d'entretien (1).
